(19) Europäisches Patentamt
European Patent Office
Office européen des brevets

(11) **EP 4 657 325 A1**

(12) **EUROPEAN PATENT APPLICATION**

(43) Date of publication:
**03.12.2025 Bulletin 2025/49**

(21) Application number: **25182230.0**

(22) Date of filing: **12.06.2025**

(51) International Patent Classification (IPC):
**G06N 3/0495** (2023.01)   **G06N 3/063** (2023.01)
**G06F 16/901** (2019.01)

(52) Cooperative Patent Classification (CPC):
**G06N 3/063; G06F 16/9017; G06N 3/0495**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.06.2024   CN 202410773328**

(71) Applicant: **Beijing Horizon Information
Technology Co., Ltd.
Beijing 100094 (CN)**

(72) Inventor: **LIN, Yongdi
Beijing, 100094 (CN)**

(74) Representative: **v. Bezold & Partner
Patentanwälte - PartG mbB
Ridlerstraße 57
80339 München (DE)**

(54) **QUANTIZATION METHOD AND APPARATUS FOR NEURAL NETWORK MODEL, MEDIUM, AND DEVICE**

(57)    Disclosed in the present disclosure are a quantization method and apparatus for a neural network model, a medium, and a device. The method includes: determining, based on an operation operator for an operation of the neural network model and input data, quantization input data corresponding to the input data; determining a target data interval corresponding to the quantization input data from a plurality of preset data intervals, where the plurality of preset data intervals are determined based on magnitudes of change gradients of output values of a quantization operator relative to its input values; determining a target quantization output value corresponding to the quantization input data based on the quantization input data and index information corresponding to the target data interval; and determining, based on the target quantization output value, a quantization result of the input data calculated by the operation operator.

| | |
|---|---|
| determining, based on an operation operator for an operation of athe neural network model and corresponding input data, quantization input data corresponding to the input data | 201 |
| determining a target data interval corresponding to the quantization input data from a plurality of preset data intervals, where the plurality of preset data intervals are determined based on magnitudes of change gradients of output values of a quantization operator relative to its input values | 202 |
| determining a target quantization output value corresponding to the quantization input data based on the quantization input data and index information corresponding to the target data interval | 203 |
| determining, based on the target quantization output value, a quantization result of the input data calculated by the operation operator | 204 |

**FIG. 2**

EP 4 657 325 A1

**Description**

**TECHNICAL FIELD**

The present disclosure relates to computer technologies, and in particular, to a quantization method and apparatus for a neural network model, a medium, and a device.

**BACKGROUND**

For deep learning models, floating-point operations have higher time and hardware costs, and the time and hardware costs are reduced typically through converting floating-point operations to integer operations by quantizing the models. When performing calculation on quantization data, for relatively complex operators, such as an exponential operator (exp operator) and a sine operator (sin operator), even if quantization operators are obtained, the calculation is still relatively complex, where a calculation result is typically obtained through table lookup. However, for quantization table lookup operations with relatively large quantization bit widths, table entries used for lookup are relatively large. For example, for quantization table lookup operations of int16, an input data range involves 65536 integers. If a table with a size of 65536 is created to store 65536 different calculation results, higher storage pressure is easily caused.

**SUMMARY**

Embodiments of the present disclosure provide a quantization method and apparatus for a neural network model, a medium, and a device, which may segment, based on magnitudes of change gradients of output values of a quantization operator relative to its input values, a quantization input data range into a plurality of preset data intervals for segmentation of table lookup, so as to reduce storage pressure and improve overall table lookup accuracy.

According to a first aspect of the present disclosure, a quantization method for a neural network model is provided, including:

determining, based on an operation operator for an operation of the neural network model and input data, quantization input data corresponding to the input data;

determining a target data interval corresponding to the quantization input data from a plurality of preset data intervals, where the plurality of preset data intervals are determined based on magnitudes of change gradients of output values of a quantization operator relative to its input values; and the quantization operator is an operator obtained by quantizing the operation operator;

determining a target quantization output value corresponding to the quantization input data based on the quantization input data and index information corresponding to the target data interval; and

determining, based on the target quantization output value, a quantization result of the input data calculated by the operation operator.

According to a second aspect of the present disclosure, a quantization apparatus for a neural network model is provided, including:

a first processing module, configured for determining, based on an operation operator for an operation of the neural network model and input data, quantization input data corresponding to the input data;

a second processing module, configured for determining a target data interval corresponding to the quantization input data from a plurality of preset data intervals, where the plurality of preset data intervals are determined based on magnitudes of change gradients of output values of a quantization operator relative to its input values; and the quantization operator is an operator obtained by quantizing the operation operator;

a third processing module, configured for determining a target quantization output value corresponding to the quantization input data based on the quantization input data and index information corresponding to the target data interval; and

a fourth processing module, configured for determining, based on the target quantization output value, a quantization result of the input data calculated by the operation operator.

According to a third aspect of the present disclosure, there is provided a non-transitory computer readable storage medium, on which a computer program is stored, where the computer program, when executed by a processor, causes the processor to implement the quantization method for the neural network model described in any one of the above embodiments of the present disclosure.

According to a fourth aspect of the present disclosure, there is provided an electronic device, including: a processor; and a memory configured for storing instructions executable by the processor, where the processor is configured for reading the executable instructions from the memory, and executing the instructions to implement the quantization method for the neural network model described in any one of the above embodiments of the present disclosure.

According to a fifth aspect of the present disclosure, there is provided a computer program product, where instructions in the computer program product, when executed by a processor, causes the processor to implement the quantization method for the neural network model provided by any one of the above embodiments of the present disclosure is performed.

Based on the quantization method and apparatus for the neural network model, the medium, and the device that are provided in the above embodiments of the present disclosure, based on an operation operator for an operation of the neural network model and input data, quantization input data corresponding to the input data may be determined; a target data interval corresponding to the quantization input data may be determined from a plurality of preset data intervals; then a target quantization output value corresponding to the quantization input data may be determined based on the quantization input data and index information corresponding to the target data interval; and a quantization result of the input data calculated by the operation operator may be determined based on the target quantization output value. As a quantization input data range is segmented into a plurality of preset data intervals, and a table lookup operation may be implemented for each preset data interval through a relatively small table entry, storage pressure caused by the table entry may be reduced. In addition, the plurality of preset data intervals are determined based on magnitudes of change gradients of output values of a quantization operator relative to its input values corresponding to the operation operator, so that change gradients of the output values of the quantization operator relative to its input values in any preset data interval have close magnitudes. Therefore, for a part where the output value of the quantization operator fluctuates significantly, a segmented preset data interval may cover a relatively small input data range, so that a table entry is created within the relatively small input data range for the corresponding preset data interval, thereby helping improve table lookup accuracy. For a part where the output value of the quantization operator fluctuates slightly, a segmented preset data interval covers a relatively large input data range. However, as the output value of the quantization operator in this part fluctuates slightly, impact on table lookup accuracy of the corresponding preset data interval is relatively small, so that the overall table lookup accuracy may be improved.

## BRIEF DESCRIPTION OF DRAWINGS

FIG. 1 illustrates an exemplary application scenario of a quantization method for a neural network model according to the present disclosure;

FIG. 2 is a schematic flowchart illustrating a quantization method for a neural network model according to an exemplary embodiment of the present disclosure;

FIG. 3 is a schematic flowchart illustrating determining of a plurality of preset data intervals according to an exemplary embodiment of the present disclosure;

FIG. 4 is a schematic flowchart illustrating determining of a plurality of preset data intervals according to another exemplary embodiment of the present disclosure;

FIG. 5 is a schematic flowchart illustrating determining of a plurality of preset data intervals according to still another exemplary embodiment of the present disclosure;

FIG. 6 is a schematic flowchart illustrating a quantization method for a neural network model according to another exemplary embodiment of the present disclosure;

FIG. 7 is a schematic flowchart illustrating a quantization method for a neural network model according to still another exemplary embodiment of the present disclosure;

FIG. 8 is a schematic flowchart illustrating determining of index information for a table lookup region according to an exemplary embodiment of the present disclosure;

FIG. 9 is a schematic diagram illustrating comparison between two manners of determining a quantization output value according to an exemplary embodiment of the present disclosure;

FIG. 10 is a schematic flowchart illustrating determining of index information for a table lookup region according to another exemplary embodiment of the present disclosure;

FIG. 11 is a schematic flowchart illustrating determining of index information for a table lookup region according to still another exemplary embodiment of the present disclosure;

FIG. 12 is a schematic diagram illustrating a lower convex hull according to an exemplary embodiment of the present disclosure;

FIG. 13 is a schematic flowchart illustrating determining of a plurality of preset data intervals according to yet another exemplary embodiment of the present disclosure;

FIG. 14 is a schematic flowchart illustrating a quantization method for a neural network model according to yet another exemplary embodiment of the present disclosure;

FIG. 15 is a schematic diagram illustrating a plurality of preset data intervals according to an exemplary embodiment of the present disclosure;

FIG. 16 is a schematic diagram illustrating a plurality of table lookup regions according to an exemplary embodiment of the present disclosure;

FIG. 17 is a schematic diagram illustrating a structure of a quantization apparatus for a neural network model according to an exemplary embodiment of the present disclosure;

FIG. 18 is a schematic diagram illustrating a structure of a quantization apparatus for a neural network model according to another exemplary embodiment of the present disclosure;

FIG. 19 is a schematic diagram illustrating a structure of a quantization apparatus for a neural network model according to still another exemplary embodiment of the present disclosure;

FIG. 20 is a schematic diagram illustrating a structure of a quantization apparatus for a neural network model according to yet another exemplary embodiment of the present disclosure;

FIG. 21 is a schematic diagram illustrating a structure of a quantization apparatus for a neural network model according to still another exemplary embodiment of the present disclosure; and

FIG. 22 is a diagram illustrating a structure of an electronic device according to an embodiment of the present disclosure.

## DETAILED DESCRIPTION OF THE EMBODIMENTS

To explain the present disclosure, exemplary embodiments of the present disclosure will be described in detail below with reference to the accompanying drawings. Apparently, the described embodiments are merely some, not all, of embodiments of the present disclosure. It should be understood that, the present disclosure is not limited by the exemplary embodiments.

It should be noted that the relative arrangement of components and steps, numerical expressions, and numerical values set forth in these embodiments do not limit the scope of the present disclosure, unless otherwise specifically stated.

Overview of Disclosure

In a process of implementing the present disclosure, the inventors found that, for deep learning models, floating-point operations have higher time and hardware costs, and the time and hardware costs are reduced typically by quantizing the models into integers. When performing on quantization data, for relatively complex operators, such as an exponential operator (exp operator) and a sine operator (sin operator), even if quantization operators are obtained, the calculation is still relatively complex, where a calculation result is typically obtained through table lookup. However, for quantization table lookup operations with relatively large quantization bit widths, table entries used for lookup are relatively large. For example, for quantization table lookup operations of int16, an input data range includes 65536 integers. If a table with a size of 65536 is created to store 65536 different calculation results, higher storage pressure is easily caused. In the related art, an input data range is typically segmented into eight intervals, which include two linear regions on the left and right and six equally segmented table lookup regions in the middle. For the linear region, fitting parameters for the linear region are obtained by linear fitting, and quantization output values corresponding to quantization input data are obtained based on the fitting parameters. For the table lookup region, each table lookup region corresponds to a table entry (or index information). The table entry includes 64 preset index values from 0 to 63 and table lookup results respectively corresponding to the preset index values (that is, quantization output values at the index values). In each table lookup region, quantization input data is mapped to an index value range of the table lookup region by a group of mapping parameters, for performing a table lookup operation, to obtain a quantization output value corresponding to the quantization input data. For input data mapped to between two adjacent preset index values, a corresponding quantization output value is obtained by interpolation. Because input data intervals corresponding to the six table lookup regions are equally segmented, for some complex quantization operators, for example, a quantization operator for an operation operator $f = \sin\left(\frac{1}{x}\right)$, where x represents input data of the operation operator. If an output value of the quantization operator corresponding to the operation operator fluctuates significantly within a range of some input data, but falls within a preset index value range of i (i=0, 1, ..., 62) to i+1 in a corresponding table lookup region, and a quantization output value within this range needs to be obtained by performing interpolation between quantization output values at i and i+1, that is, a portion of the quantization operator that falls between i and i+1 is represented by a linear fitting line segment. Obviously, the line segment cannot reflect significant fluctuations within this range, and thus it is easy to cause table lookup accuracy of the portion with larger fluctuations to be low, thus reducing overall table lookup accuracy of the quantization operator.

Exemplary Overview

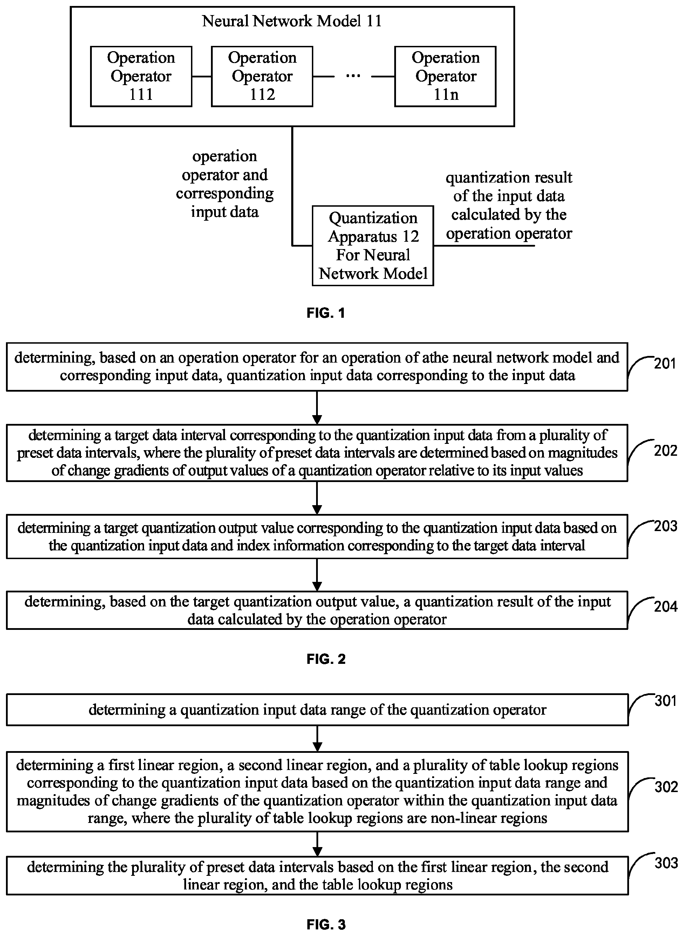

FIG. 1 illustrates an exemplary application scenario of a quantization method for a neural network model according to the present disclosure. As shown in FIG. 1, the neural network model 11 includes a plurality of operation operators, and the plurality of operation operators include, for example, n operation operators from operation operator 111 to operation operator 11n. In a quantization process of the neural network model 11, for some complex operation operators in the neural network model 11, quantization results of input data of the operation operators may be obtained through being calculated by the operation operators using the quantization method for the neural network model (performed in a quantization apparatus 12 for the neural network model) in the present disclosure. Specifically, based on an operation operator for an operation of the neural network model and input data, quantization input data corresponding to the input data may be determined; a target data interval corresponding to the quantization input data may be determined from a plurality of preset data intervals; then a target quantization output value corresponding to the quantization input data may be determined based on the quantization input data and index information corresponding to the target data interval; and a quantization result of the input data calculated by the operation operator may be determined based on the target quantization output value. As a quantization input data range is segmented into a plurality of preset data intervals, a table lookup operation may be implemented for each preset data interval through a relatively small table entry, and accordingly storage pressure caused by the table entry may be reduced. In addition, the plurality of preset data intervals are determined based on magnitudes of change gradients of output values of a quantization operator relative to its input values corresponding to the operation operator, so that change gradients of the output values of the quantization operator relative to its input values in any preset data interval may have close magnitudes. Therefore, for a part where the output value of the quantization operator fluctuates significantly, a segmented preset data interval may cover a relatively small input data range, so that a table entry is created within the relatively small input data range for the corresponding preset data interval, thereby helping improve table lookup accuracy. For a part where the output value of the quantization operator fluctuates slightly, a segmented preset data interval covers a relatively large input data range. However, as the output value of the quantization operator in this part fluctuates slightly, impact on table lookup accuracy of the corresponding preset data interval is relatively small, so that the overall table lookup accuracy may be improved.

Exemplary Method

FIG. 2 is a schematic flowchart illustrating a quantization method for a neural network model according to an exemplary embodiment of the present disclosure. This embodiment may be applied to an electronic device, for example, a server, a terminal device, an in-vehicle computing platform, and other electronic devices. As shown in FIG. 2, the method in this embodiment of the present disclosure may include the following steps:

Step 201: Determining, based on an operation operator for an operation of the neural network model and input data, quantization input data corresponding to the input data.

The neural network model may be any model of any scene. For example, the neural network model may be a target detection model, a semantic segmentation model, an image classification model, a trajectory prediction model, a speech recognition model, a text recognition model, and the like, which is not specifically limited. The operation operator for the operation of the neural network model refers to various operators that implement the operation of the neural network model. For example, the operation operator may include an exponential operator (exp operator), a sine operator (sin operator), a logarithm operator (log), and any other possible operators, which is not specifically limited. The input data corresponding to the operation operator refers to input data on which calculation needs to be performed by the operation operator. The input data may be input data of the model (that is, a current operation operator is the first operator for the model) or feature data generated during a model inference process (that is, feature data output from another operation operator before a current operation operator). The input data of the model may be image data, text data, speech data, and the like. For example, if the exponential operator is expressed as y=exp(x), x represents input data, and y represents output data calculated by the exponential operator. The quantization input data corresponding to the input data refers to input data in a preset data format that is obtained by quantizing the input data in a preset quantization manner. The preset data format may involve a data type and a bit width. For example, the preset data format includes int8, int16, int12, int24, int32, or the like, int representing a data type of integer, and a value after int representing the bit width. For example, int16 represents integer data with a bit width of 16.

Exemplarily, an operation operator is a floating-point (float) exp operator, expressed as $y_{float} = e^{xfloat}$, where both input data $x_{float}$ and an output value $y_{float}$ represent floating-point tensors or values. Converting floating-point input data to fixed-point quantization input data through a set of constants is the quantizing of input data, and a quantization formula may be expressed as follows:

$$x_{int} = clamp\left(round\left(\frac{x_{float}}{scale} + z\right)\right) \qquad \text{Formula 1}$$

where *scale* and z refer to the above-mentioned set of constants, *scale* representing a floating-point number, and z representing an integer in a specified range. The specified range may be, for example, a range of int8 or a range of int16, which is specifically determined according to a quantization requirement. *round*() is a rounding function, *clamp*() is used for saturating a result of *round*() within a specified range, which may be, for example, a range of int8, int16, or int32. Using int8 as an example, int8 has a data range of 0-255. If the result of *round*() is greater than 255, 255 is used as $x_{int}$; and if the result of *round*() is less than 0, 0 is used as $x_{int}$.

In some optional embodiments, the quantization input data corresponding to the input data may include one or more quantization input values. For example, if the input data is a tensor (such as a one-dimensional vector, a two-dimensional matrix, or a three-dimensional tensor), meaning the input data includes a plurality of input values, the quantization input data may include a quantization input value corresponding to each of the input values.

Step 202: Determining a target data interval corresponding to the quantization input data from a plurality of preset data intervals, where the plurality of preset data intervals are determined based on magnitudes of change gradients of output values of a quantization operator relative to its input values.

The quantization operator is an operator obtained by quantizing the operation operator. The plurality of preset data intervals are a plurality of data intervals obtained by segmenting a quantization input data range based on magnitudes of change gradients of the output values of the quantization operator relative to its input values within the quantization input data range. For example, a quantization input data range of int16 is a range from - 32768 to 32767, and is segmented into a plurality of data intervals as the plurality of preset data intervals. The number of preset data intervals included in the plurality of preset data intervals may be any number. For example, the number of preset data intervals may be 2, 3, 6, 8, or 12.

In some optional embodiments, the plurality of preset data intervals may include a plurality of table lookup regions. That is, each of the preset data intervals is a table lookup region.

In some optional embodiments, the plurality of preset data intervals may include linear regions and table lookup regions. The number of linear regions may be one or two. The number of table lookup regions may be at least one. For example, the plurality of preset data intervals may include two linear regions and a plurality of table lookup regions. The two linear regions are intervals at left and right ends of the quantization input data range, namely, a left linear region (which may also be referred to as a first linear region) and a right linear region (which may also be referred to as a second linear region). The plurality of table lookup regions are a non-linear region other than the linear regions in the quantization input data range. The non-linear region is segmented into a plurality of table lookup regions. For example, the quantization input data range [-32768, 32767] is segmented into a first linear region [-32768, a1), a second linear region (a7, 32767], a table lookup region [a1, a2), a table lookup region [a2, a3), a table lookup region [a3, a4), a table lookup region [a4, a5), a table lookup region [a5, a6), and a table lookup region [a6, a7).

In some optional embodiments, matching may be performed between the quantization input data and each of the preset data intervals, to determine a preset data interval to which the quantization input data belongs as the target data interval corresponding to the quantization input data.

In some optional embodiments, the magnitude of the change gradient of the output values of the quantization operator relative to its input values may represent a fluctuation degree of the quantization operator. The purpose of determining the plurality of preset data intervals based on the magnitude of the change gradient of the output values of the quantization operator relative to its input values is to make a fluctuation degree of the quantization operator in each of the preset data intervals relatively small, thereby avoiding or reducing the occurrence of a significant fluctuation in a preset data interval, reducing adverse impact of the fluctuation on table lookup accuracy, and thus improving overall table lookup accuracy.

In some optional embodiments, a floating-point operation operator may be expressed as follows:

$$y_{float} = f(x_{float}) \qquad \text{Formula 2}$$

The quantization operator corresponding to the operation operator may be determined by.

Based on the quantization formula (Formula 1) described above, an inverse quantization formula is obtained as follows:

$$x_{float} = (x_{int} - z) * scale \qquad \text{Formula 3}$$

The inverse quantization formula (Formula 3) is substituted into the floating-point operator (Formula 2) to obtain:

$$(y_{int} - z_y) * scale = f((x_{int} - z) * scale) \text{ Formula 4}$$

Formula 4 may be transformed to obtain a quantization operator as follows:

$$y_{int} = clamp\left(round\left(\frac{f((x_{int}-z)*scale)}{scale} + z\right)\right) \text{ Formula 5}$$

Using the exponential operator as an example, the corresponding quantization operator may be expressed as follows:

$$y_{int} = clamp\left(round\left(\frac{e^{(x_{int}-z)*scale}}{scale} + z\right)\right) \text{ Formula 6}$$

The quantization operator corresponding to the operation operator may be obtained based on the process described above.

Step 203: Determining a target quantization output value corresponding to the quantization input data based on the quantization input data and index information corresponding to the target data interval.

The index information corresponding to the target data interval is predetermined table lookup information (which may also be referred to as a table entry). The index information may involve a lookup rule for determining the corresponding quantization output value based on the quantization input data.

In some optional embodiments, for each preset data interval, a table entry corresponding to the preset data interval may be determined in advance based on a specific operation status of the quantization operator, for a table lookup operation for the preset data interval.

In some optional embodiments, for table lookup regions in the plurality of preset data intervals, index information corresponding to each of the table lookup regions may include a plurality of preset index values corresponding to the table lookup region and quantization output values respectively corresponding to the preset index values. For example, the plurality of preset index values corresponding to each of the table lookup regions include 64 preset index values: 0, 1, 2, ..., and 63. The preset index values have a certain mapping relationship with a quantization input data interval range of the table lookup region. The mapping relationship may be expressed as a mapping parameter. A quantization input value $a_i$

corresponding to each preset index value $i$ ($i$ = 0, 1, 2, ..., 63) in the table lookup region is determined based on the mapping parameter, and a quantization output value $A_i$ corresponding to the preset index value is determined based on the quantization input value $a_i$ and the quantization operator. When a table lookup operation is required, quantization input data $a_j$ belonging to the table lookup region is mapped to a data range of the preset index values based on the mapping parameter (a mapping result may be the preset index value or an index value falling between two adjacent preset index values), so as to obtain a target quantization output value $A_j$ corresponding to the quantization input data $a_j$ through the table lookup operation.

In some optional embodiments, the index information corresponding to the table lookup region may also include a mapping parameter from the quantization input value in the table lookup region to the data range of the preset index values. After the target data interval corresponding to the quantization input data is determined, the quantization input data may be mapped to an index value range based on the mapping parameter, so as to determine the target quantization output value corresponding to the quantization input data through table lookup by each of the preset index values.

In some optional embodiments, the mapping parameter corresponding to the table lookup region may alternatively be stored separately from the index information. For example, each table lookup region and the corresponding mapping parameter are stored in a first storage space, and the index information corresponding to the table lookup region is stored in a second storage space.

In some optional embodiments, if the plurality of preset data intervals include linear regions, index information corresponding to each of the linear regions may include fitting parameters for the linear region. The fitting parameters may include a fitting slope $k$, a fitting intercept $b$, and quantization constants $s_1$ and $s_2$, where $k$, $b$, $s_1$, and $s_2$ are all integers. The target quantization output value $y_{int}$ corresponding to the quantization input data is determined by the fitting parameters, and may be expressed as follows:

$$y_{int} = clamp((k * x + (b << s_1)) >> s_2) \qquad \text{Formula 7}$$

where $b << s_1$ represents shifting b to the left by $s_1$ bits, and $(k * x + (b << s_1)) >> s_2$ represents shifting $(k * x + (b << s_1))$ to the right by $s_2$ bits.

Step 204: Determining, based on the target quantization output value, a quantization result of the input data calculated by the operation operator.

The quantization result of the input data calculated by the operation operator may include one or more quantization output values, a number of which is specifically determined according to the number of input values included in the input data. For example, if the input data is a tensor, including a plurality of elements (input values), each of the input values corresponds to one quantization input value, where for each quantization input value, a corresponding target quantization output value may be obtained through a table lookup operation. The target quantization output values respectively corresponding to the quantization input values constitute the quantization result of the input data calculated by the operation operator. If the input data includes only one input value, the target quantization output value may be determined as the quantization result of the input data calculated by the operation operator.

According to the quantization method for the neural network model provided in this embodiment, as a quantization input data range is segmented into a plurality of preset data intervals, and a table lookup operation may be implemented for each preset data interval through a relatively small table entry, storage pressure caused by the table entry may be reduced. In addition, the plurality of preset data intervals are determined based on magnitudes of change gradients of output values of a quantization operator relative to its input values corresponding to the operation operator, so that change gradients of the output values of the quantization operator relative to its input values in any preset data interval may have close magnitudes. Therefore, for a part where the output value of the quantization operator fluctuates significantly, a segmented preset data interval may cover a relatively small input data range, so that a table entry is created within the relatively small input data range for the corresponding preset data interval, thereby helping improve table lookup accuracy. For a part where the output value of the quantization operator fluctuates slightly, a segmented preset data interval covers a relatively large input data range. However, as the output value of the quantization operator in this part fluctuates slightly, impact on table lookup accuracy of the corresponding preset data interval is relatively small, so that the overall table lookup accuracy may be improved.

In some optional embodiments, based on the embodiment shown in FIG. 2 above, the method of this embodiment of the present disclosure may also include: determining the plurality of preset data intervals within the quantization input data range based on the magnitude of the change gradient of the output values of the quantization operator relative to its input values.

FIG. 3 is a schematic flowchart illustrating determining of a plurality of preset data intervals according to an exemplary embodiment of the present disclosure.

In some optional embodiments, based on the embodiment shown in FIG. 2 above, the plurality of preset data intervals may be obtained through the following steps:

Step 301: Determining a quantization input data range of the quantization operator.

The quantization input data range is a data range corresponding to quantization input data of the quantization operator. For example, a data range of quantization input data of int8 is [0, 255], and a data range of quantization input data of int16 is [-32768, 32767].

Step 302: Determining a first linear region, a second linear region, and a plurality of table lookup regions corresponding to the quantization input data based on the quantization input data range and magnitudes of change gradients of the quantization operator within the quantization input data range, where the plurality of table lookup regions are non-linear regions.

The first linear region and the second linear region may be intervals at two ends of the quantization input data range, such as the first linear region [-32768, a1) and the second linear region (a7, 32767] described above. The plurality of table lookup regions are intervals between the first linear region and the second linear region, such as the table lookup regions [a1, a2) and [a6, a7) described above.

In some optional embodiments, the first linear region and the second linear region may be determined first based on a linear fitting status at two ends of the quantization operator. Based on the first linear region and the second linear region, non-linear regions in the middle may be determined, and then, the plurality of table lookup regions may be determined based on the magnitude of the change gradient of the output value of the quantization operator in the non-linear regions.

In some optional embodiments, the first linear region and the second linear region are determined through least squares fitting.

Step 303: Determining the plurality of preset data intervals based on the first linear region, the second linear region, and the table lookup regions.

Each of the first linear region, the second linear region, and the table lookup regions is used as a preset data interval to obtain a plurality of preset data intervals within the quantization input data range.

In this embodiment of the present disclosure, based on the magnitude of the change gradient of the quantization operator within the quantization input data range, the quantization input data range of the quantization operator is segmented into the first linear region, the second linear region, and the plurality of table lookup regions, so as to implement the effective determining of the plurality of preset data intervals. As the table lookup regions are determined based on the magnitude of the change gradient of the quantization operator within the quantization input data range, the quantization operator may be enabled to fluctuate slightly in each table lookup region, so that the overall table lookup accuracy may be improved.

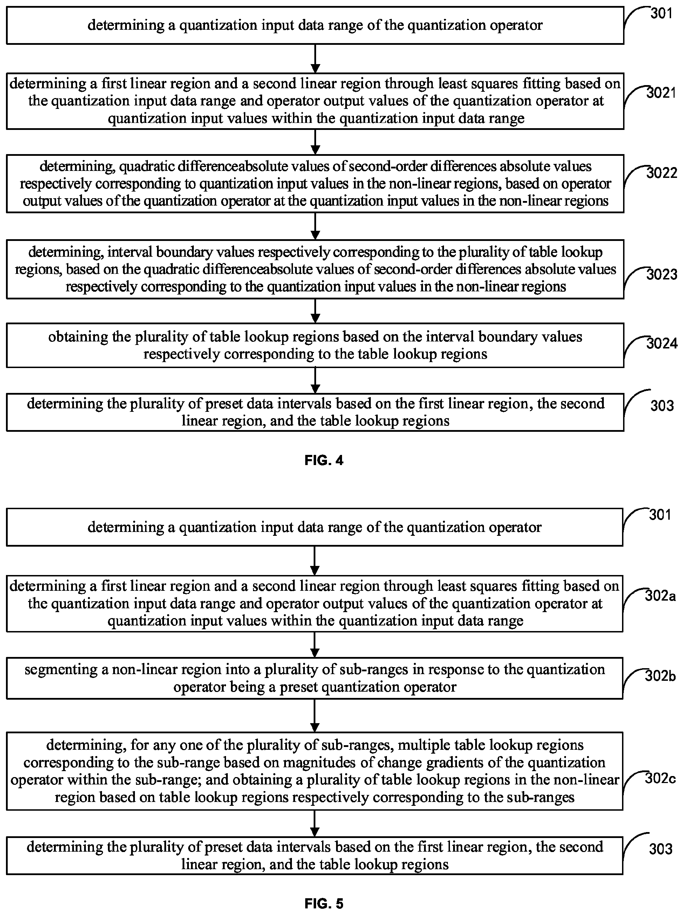

FIG. 4 is a schematic flowchart illustrating determining of a plurality of preset data intervals according to another exemplary embodiment of the present disclosure.

In some optional embodiments, as shown in FIG. 4, based on the embodiment shown in FIG. 3 above, step 302 of determining a first linear region, a second linear region, and a plurality of table lookup regions corresponding to the quantization input data based on the quantization input data range and magnitudes of change gradients of the quantization operator within the quantization input data range may include the following steps:

Step 3021: Determining the first linear region and the second linear region through least squares fitting based on the quantization input data range and operator output values of the quantization operator at quantization input values within the quantization input data range.

The operator output value is a real output value calculated by the quantization operator. For example, according to Formula 6 described above, calculation is performed on the quantization input value $x_{int}$ to obtain $y_{int}$.

In some optional embodiments, least squares fitting refers to finding a straight line with a minimum fitting error or a fitting error within a preset error range through linear fitting in combination with the least squares approach, that is, determining a straight line based on some points of the given quantization operator at one end of the quantization input data range (that is, the quantization input value and the corresponding operator output value), so that a sum of the squares of distances of all the points to the straight line is a minimum or less than a preset value, to obtain descriptive parameters for the straight line (that is, a slope and an intercept), thereby obtaining a linear equation, and quantizing the linear equation into fitting parameters $k$, $b$, $s_1$, and $s_2$ of the linear region. Exemplarily, using the first linear region (left linear region) as an example, an operator output value corresponding to each quantization input value $x_i$ ($i = 1, 2,..., n$, where n represents the number of quantization input values within the quantization input data range) of the quantization operator to be fitted is denoted as $y_i$, and $(x_i, y_i)$ is regarded as a point. Starting from the left end of the quantization input data range, first, $(x_1, y_1)$ and $(x_2, y_2)$ are added to the left linear region, a straight line with a minimum error is calculated by the least squares approach, and a corresponding fitting error is recorded. If the fitting error is within a preset error range, proceeding to add $(x_3, y_3)$ to the left linear region, a straight line with a minimum error is calculated by the least squares approach, and a corresponding fitting error is recorded. If the fitting error is within the preset error range, proceeding to add a next point to the left linear region, and so on, until a last-added point $(x_t, y_t)$ causes the fitting error to exceed the preset error range, where $t$ is an integer greater than 2. The last-added point $(x_t, y_t)$ is removed from the left linear region, a quantization input data interval $[x_1, x_{t-1}]$ corresponding to the previously added points $(x_1, y_1)$ to $(x_{t-1}, y_{t-1})$ is determined as the left linear region, and a correspondingly fitted linear equation is quantized as the fitting parameters $k$, $b$, $s_1$, and $s_2$ of the left linear region. The principle of determining the right linear region is similar to that of the left linear region, except that, for the right linear region, the addition of points to the right linear region starts from points at the right end, and the details are not repeated.

Step 3022: Determining, absolute values of second-order differences respectively corresponding to quantization input values in the non-linear regions, based on operator output values of the quantization operator at the quantization input values in the non-linear regions.

The absolute value of second-order difference corresponding to each quantization input value refers to an absolute value of a second-order difference of the operator output value of the quantization operator at the quantization input value. Since the quantization input values in the non-linear region are discrete values, and the operator output values of the quantization operator at the quantization input values in the non-linear region are discrete values, and accordingly the absolute value of second-order difference is used to represent the magnitude of the change gradient of the quantization operator. The absolute value of second-order difference is similar to a second-order derivative of a continuous function. The second-order derivative of the continuous function represents a change rate of a slope of the continuous function at a corresponding point. The second-order difference represents a gradient of a change of the operator output value at the corresponding quantization input value, that is, a difference between two adjacent changes. The two adjacent changes refer to differences between every two adjacent operator output values in three adjacent operator output values. For example, an operator output value corresponding to a quantization input value $x_i$ is $y_i$, then an absolute value of second-order difference $y_i''$ corresponding to the quantization input value $x_i$ may be expressed as follows:

$$y_i'' = |(y_{i+1} - y_i) - (y_i - y_{i-1})| \qquad \text{Formula 8}$$

where, | | denotes taking an absolute value.

Step 3023: Determining, interval boundary values respectively corresponding to the plurality of table lookup regions, based on the absolute values of second-order differences respectively corresponding to the quantization input values in the non-linear regions.

The absolute values of second-order differences respectively corresponding to the quantization input values may represent the magnitudes of the change gradients of the quantization operator at the quantization input values, and the interval boundary values respectively corresponding to the plurality of table lookup regions may be determined based on a principle of minimizing a change gradient for each table lookup region. That is, a sum of absolute values of second-order differences in each of the plurality of table lookup regions obtained by segmenting the non-linear regions is less than a gradient threshold. The gradient threshold may be set based on a specific change status of the quantization operator, or may be determined by a certain search algorithm.

Step 3024: Obtaining the plurality of table lookup regions based on the interval boundary values respectively corresponding to the table lookup regions.

The interval boundary values for the table lookup region represent boundaries of the quantization input values for the table lookup region. Therefore, after the interval boundary values respectively corresponding to the table lookup regions are determined, the corresponding table lookup regions may be obtained based on the interval boundary values. For example, if interval boundary values for a table lookup region include a left boundary value a1 and a right boundary value a2, the corresponding table lookup region may be determined to be [a1, a2). Whether the table lookup region includes both interval boundary values may be set according to actual needs. For example, the table lookup region may alternatively be expressed as (a1, a2].

In this embodiment of the present disclosure, the absolute value of second-order difference for the quantization operator at each of the quantization input values may effectively represent the magnitude of the change gradient of the quantization operator, thereby providing an accurate and effective reference gradient for the segmentation of table lookup regions, enabling change gradients of the obtained plurality of table lookup regions to be relatively close, and avoiding relatively significant fluctuations in a same table lookup region, so that table lookup accuracy of a part with relatively large quantization operator fluctuations may be improved, thus improving overall table lookup accuracy.

In some optional embodiments, step 3023 of determining, interval boundary values respectively corresponding to the plurality of table lookup regions, based on the absolute values of second-order differences respectively corresponding to the quantization input values in the non-linear regions includes:

determining a to-be-searched threshold range; determining a target threshold within the to-be-searched threshold range based on a binary search approach, so that a sum of absolute values of second-order differences respectively corresponding to quantization input values in all of a plurality of intervals obtained by segmenting the non-linear region is less than or equal to the target threshold; and determining, as the interval boundary values for the table lookup regions, boundary values of the intervals obtained by segmenting the non-linear region.

The to-be-searched threshold range refers to a range of the gradient threshold. For a problem of how to make the change gradients of the quantization operator in the respective table lookup regions have close magnitudes, that is, how to make the sums of the absolute values of second-order differences in the respective table lookup regions as close as possible, a to-be-searched threshold range may be determined, where the to-be-searched threshold range has an upper limit value $s_{max}$ which is large enough to enable a sum of absolute values of second-order differences for each of the table lookup regions (each of the plurality of intervals obtained through segmentation) to be less than $s_{max}$, regardless of how the non-linear region is segmented, and a lower limit value $s_{min}$ which is small enough to cause the sum of the absolute values of second-order differences for each of the table lookup regions not to be less than $s_{min}$, regardless of how the non-linear region is segmented, $s_{min}$ and $s_{max}$ being both integers. By searching, a minimum integer threshold $s_k$ is found in the to-be-searched threshold range $[s_{min}, s_{max}]$, so that the sum of the absolute values of second-order differences for each of the table lookup regions obtained by segmenting the non-linear region is less than $s_k$. Obviously, the search for the threshold is monotonic, that is, if the threshold is large enough, a gradient condition described as above may be satisfied definitely (that is, the sum of the absolute values of second-order differences for each of the table lookup regions obtained by segmenting the non-linear region is less than the gradient threshold); and if the threshold is small enough, the gradient condition cannot be satisfied definitely. Based on this, an end condition for searching for the minimum $s_k$ satisfying the gradient condition refers to that: a threshold $s_{k+1}$ greater than $s_k$ may enable the segmentation of the non-linear region to satisfy the gradient condition described above, while a threshold $s_{k-1}$ less than $s_k$ cannot enable the segmentation of the non-linear region to satisfy the gradient condition described above. Based on the case that the boundary values of the intervals obtained by segmenting the non-linear region, that may satisfy the gradient condition described above are determined as the interval boundary values for the table lookup regions, $s_k$ being the target threshold.

In some optional embodiments, for any interval in the plurality of intervals, a sum $y''_{alt}$ of absolute values of second-order differences respectively corresponding to quantization input values in the interval may be expressed as follows:

$$y''_{alt} = \sum_{i=1}^{m} y''_i \qquad \text{Formula 9}$$

where m represents the number of the quantization input values in the interval, and $y''_i$ represents an absolute value of second-order difference corresponding to an $i^{th}$ quantization input value in the interval.

In some optional embodiments, the binary search approach is a search algorithm for searching an ordered array (that is, an array consisting of candidate thresholds within the to-be-searched threshold range) for a specific element (that is, a target threshold that may satisfy the gradient condition). The search process starts from an intermediate element of the array. If the intermediate element is exactly the specific element to be searched for, the search process ends. If the specific element is greater than the intermediate element, the search continues within a half of the array that is greater than the intermediate element, starting still from an intermediate element of the half. Similarly, if the specific element is less than the intermediate element, the search continues within a half of the array that is less than the intermediate element, and so on, until the specific element is found or the array is empty (indicating that the specific element cannot be found), the search ends. In such a search algorithm, a search range is reduced by half each time, effectively improving search efficiency.

In some optional embodiments, first, an intermediate element is determined from $[s_{min}, s_{max}]$ as a currently found threshold $s_i$ (referred to as a current threshold), and the non-linear region may be segmented in plurality of manners based on the current threshold. In each manner, the non-linear region is segmented into a preset number of table lookup regions. The preset number may be any value. For example, the preset number may be 2, 3, 4, 5, or 6. At least one of the preset number of table lookup regions in each of different segmentation manners has a different interval boundary value. For each segmentation manner, a sum of absolute values of second-order differences for each table lookup region is calculated, and it is determined, based on a magnitude relationship between the current threshold and the sum of the absolute values of second-order differences for each table lookup region, whether the segmentation manner satisfies the gradient condition (that is, whether the sum of the absolute values of second-order differences for each table lookup region is less than the current threshold). If there is at least one segmentation manner that satisfies the gradient condition, it may be determined that the minimum target threshold $s_k$ is less than or equal to the current threshold, and the search continues for a next threshold from a half threshold range $[s_{min}, s_i]$ less than the current threshold, where an intermediate element of $[s_{min}, s_i]$ is used as the current threshold. If no segmentation manner that satisfies the gradient condition is found, it may be determined that the target threshold should be greater than the current threshold, and an intermediate element $s_{i+1}$ is determined as the current threshold from a half range $[s_i, s_{max}]$ greater than the current threshold. It continues to be determined, according to the foregoing process, whether there is a segmentation manner that satisfies the gradient condition. When the target threshold is in the range of $[s_{min}, s_i]$, if there is a segmentation manner, for the current threshold $s_{i+1}$, that satisfies the gradient condition, it may be determined that the target threshold should be less than or equal to $s_{i+1}$, and proceeding to determine, from $[s_{min}, s_{i+1}]$, a next threshold continues to be determined as the current threshold; otherwise, a next threshold continues to be determined from $[s_{i+1}, s_i]$ as the current threshold, and so on, until the minimum target threshold $s_k$ that may satisfy the gradient condition and the segmentation manner that satisfies the gradient condition are found, to obtain the interval boundary values for each table lookup region.

In some optional embodiments, a boundary value adjustment rule for the plurality of table lookup regions obtained by segmenting the non-linear region may be set, and different segmentation manners are determined by adjusting the boundary values for the table lookup regions. For example, interval boundary values for table lookup regions in an initial segmentation manner may be set, and after a sum of absolute values of second-order differences for each of the table lookup regions is obtained through calculation, the interval boundary values for the table lookup regions in the initial segmentation manner are adjusted according to the boundary value adjustment rule to obtain a second segmentation manner. After the sum of the absolute values of second-order differences for each of the table lookup regions is obtained through calculation, the steps of adjusting the interval boundary values for the table lookup regions in the initial segmentation manner according to the boundary value adjustment rule and calculating the sum of the absolute values of second-order differences for each of the table lookup regions are repeated, until a segmentation manner that satisfies the gradient condition is found, or the adjustment of the boundary values reaches the end condition. The boundary value adjustment rule may involve the number of table lookup regions adjusted each time and an adjustment step size. It may be understood that the number of table lookup regions is at least two, because adjacent table lookup regions have a same boundary value at a critical point. Therefore, adjusting a boundary value of one table lookup region inevitably leads to a change in a boundary value of another table lookup region that shares the boundary value. The adjustment step size may be set according to actual needs. For example, the adjustment step size may be 1, 2, or 3.

In this embodiment of the present disclosure, through the binary search approach, it is possible to find accurately a minimum target threshold that may enable a sum of absolute values of second-order differences in each interval obtained through segmentation to satisfy the gradient condition, to enable change gradients of operator output values of a quantization operator in the table lookup regions obtained through segmentation to be relatively close, avoiding significant fluctuations of the quantization operator in a table lookup region, reducing adverse impact of the fluctuations on table lookup accuracy, and thus greatly improving the table lookup accuracy. In addition, searching for the target threshold through the binary search approach may improve search efficiency.

FIG. 5 is a schematic flowchart illustrating determining of a plurality of preset data intervals according to still another exemplary embodiment of the present disclosure.

In some optional embodiments, as shown in FIG. 5, based on the embodiment shown in FIG. 3 above, step 302 of determining a first linear region, a second linear region, and a plurality of table lookup regions corresponding to the quantization input data based on the quantization input data range and magnitudes of change gradients of the quantization operator within the quantization input data range may include:

Step 302a: Determining the first linear region and the second linear region through least squares fitting based on the quantization input data range and operator output values of the quantization operator at quantization input values within the quantization input data range.

For a specific operation of step 302a, refer to step 3021.

Step 302b: Segmenting the non-linear region into a plurality of sub-ranges in response to the quantization operator being a preset quantization operator.

The preset quantization operator may be a preset operator that is relatively complex. For example, the preset quantization operator may be a composite operator which refers to an operator consisting of at least two types of operators, such as a composite operator consisting of a sine operator and an exponential operator. That is, a quantization input value within a sub-range of the quantization input data range is an input value of the sine quantization operator, and a quantization input value within another sub-range of the quantization input data range is an input value of the exponential quantization operator. If required table lookup accuracy cannot be achieved through the above-mentioned preset number of table lookup regions, the non-linear region may be segmented into a plurality of sub-ranges, to achieve a fine-grained segmentation of the non-linear region to further improve the table lookup accuracy.

In some optional embodiments, a sub-range segmentation rule may be set, and the non-linear region is segmented into a plurality of sub-ranges based on the sub-range segmentation rule. The sub-range segmentation rule may involve at least one of the number of sub-ranges and the number of quantization input values of the sub-range. For example, the non-linear region may be evenly segmented into a plurality of sub-ranges according to the number of sub-ranges. Alternatively, the non-linear region may be segmented into a plurality of sub-ranges according to the number of quantization input values of the sub-range.

Exemplarily, the non-linear region may be segmented at a quantization input value in the middle to obtain two sub-ranges. For example, the non-linear region of [a1, a7] is segmented into two sub-ranges of [a1, a4) and [a4, a7]. Certainly, in practice, the non-linear region may also be segmented into more sub-ranges.

Step 302c: determining, for any one of the plurality of sub-ranges, multiple table lookup regions corresponding to the sub-range based on magnitudes of change gradients of the quantization operator within the sub-range; and obtaining a plurality of table lookup regions in the non-linear region based on table lookup regions respectively corresponding to the sub-ranges.

For any sub-range, for a specific principle of determining multiple table lookup regions corresponding to the sub-range, reference may be made to the above-mentioned steps 3022 to 3024. To be specific, each sub-range is used as one above-mentioned non-linear region, and steps 3022 to 3024 are performed to obtain multiple table lookup regions corresponding to each sub-range. The table lookup regions respectively corresponding to the plurality of sub-ranges constitute the plurality of table lookup regions of the non-linear region.

In this embodiment of the present disclosure, the non-linear region is segmented into a plurality of sub-ranges, achieving further granular refinement, and then multiple table lookup regions are determined for each of the sub-ranges, which is equivalent to determining two groups of table lookup regions for the non-linear region, increasing the number of table lookup regions, and helping further improve the table lookup accuracy. For example, a table lookup operation in a range of [a1, a7] is implemented originally by six table lookup regions. In this embodiment, it may be expanded to 12 table lookup regions. An average number of quantization input values covered by each table lookup region is reduced, while a size of a table entry corresponding to each table lookup region may remain unchanged, that is, the number of preset index values and the corresponding number of quantization output values remain unchanged, which is equivalent to reducing the number of quantization input values, which need to be obtained through interpolation, of the quantization output values. As interpolation is a main factor that reduces the table lookup accuracy, reducing the number of the quantization input values for interpolation may effectively improve the table lookup accuracy.

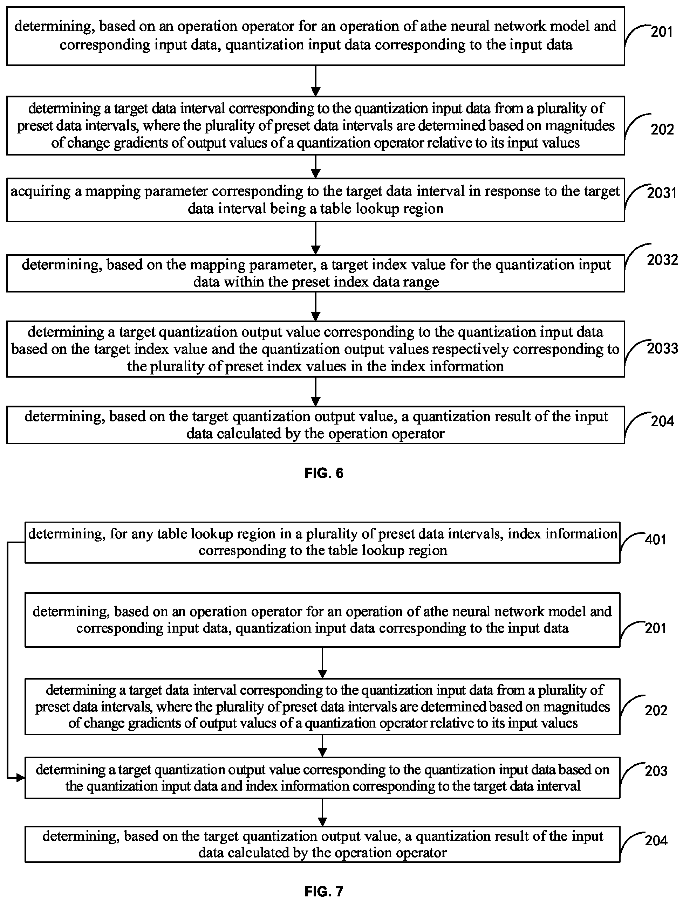

FIG. 6 is a schematic flowchart illustrating a quantization method for a neural network model according to another exemplary embodiment of the present disclosure.

In some optional embodiments, the index information corresponding to each of the table lookup regions in the plurality of preset data intervals may include the quantization output values respectively corresponding to the plurality of preset index values.

The plurality of preset index values corresponding to each table lookup region are table lookup index values used for table lookup. Preset index values of different table lookup regions may be the same or different. For example, the plurality of preset index values of each table lookup region may be 64 preset index values of 0 to 63. Alternatively, a plurality of preset index values of one table lookup region may be 64 preset index values of 0 to 63, and a plurality of preset index values of another table lookup region may be 64 preset index values of 64 to 127, which is not specifically limited.

In some optional embodiments, a sum of numbers of preset index values corresponding to all the table lookup regions is less than or equal to the number of quantization input values included in the non-linear region. For example, for quantization input data of int16 or a larger bit width, each table lookup region corresponds to 64 preset index values, and there are six table lookup regions in total, with a total of 64*6=384 preset index values. That is, a size of a table entry of the non-linear region is quantization output values respectively corresponding to the 384 preset index values. A quantization input data range of int16 includes 65536 quantization input values. If quantization output values corresponding to all the quantization input values are stored, the storage pressure is extremely high. Through setting of a smaller number of preset index values in each table lookup region, a storage amount of the table entry is reduced from 65536 to 384. It may be seen that the storage pressure of the table entry may be effectively alleviated. Certainly, in practice, the number of preset index values corresponding to each table lookup region is not limited to 64, and may be set to any value according to an actual storage requirement. The principle is that, relative to the overall number of quantization input values, the number of preset index values corresponding to each table lookup region may reduce the storage pressure of the table entry.

In some optional embodiments, as shown in FIG. 6, based on the embodiment shown in FIG. 2 above, step 203 of determining a target quantization output value corresponding to the quantization input data based on the quantization input data and index information corresponding to the target data interval may include:

Step 2031: Acquiring a mapping parameter corresponding to the target data interval in response to the target data interval being a table lookup region.

The mapping parameter is used for mapping the quantization input data from a quantization input data range to a preset index data range corresponding to the target data interval. The preset index data range is a data range of a table lookup index value corresponding to the target data interval. The table lookup index value is the preset index value described above.

In some optional embodiments, the mapping parameter may be mapping parameters for a linear mapping. Similar to the above-mentioned fitting parameters, the mapping parameters may be expressed as $k_1$, $b_1$, $s_3$, and $s_4$. A mapping parameter for each table lookup region is used for mapping quantization input values in the table lookup region to a preset index data range corresponding to the table lookup region. For example, a quantization input value, belonging to the table lookup region, in the quantization input data range of int16 is mapped to a preset index data range of [0, 63].

In some optional embodiments, mapping parameters for different table lookup regions may be different. Specifically, the mapping parameter is determined based on an association relationship between the quantization input values for the table lookup region and the preset index data range.

Step 2032: Determining, based on the mapping parameter, a target index value for the quantization input data within the preset index data range.

The target index value may be a certain preset index value or a value between two adjacent preset index values. Because the total number of quantization input values in the non-linear region is inconsistent with the total number of preset index values, a value of the preset index data range to which a quantization input value is mapped may not be an integer, that is, may not be a preset index value.

Exemplarily, the mapping parameters are represented by $k_1$, $b_1$, $s_3$, and $s_4$, and the target index value *index* may be expressed as follows:

$$index = \frac{k_1 * x_i + b_1 * 2^{s_3}}{2^{s_4}} \qquad \text{Formula 10}$$

where $x_i$ represents the quantization input data (or the quantization input value in the quantization input data).

Step 2033: Determining, the target quantization output value corresponding to the quantization input data, based on the target index value and the quantization output values respectively corresponding to the plurality of preset index values in the index information.

The index information is predetermined and stored, that is, the quantization output value corresponding to the preset index value is predetermined and stored. The index information includes the quantization output values respectively corresponding to the plurality of preset index values. Therefore, the quantization output values respectively corresponding to the plurality of preset index values may be acquired from the index information. The target quantization output value corresponding to the quantization input data is determined based on the target index value and the quantization output values respectively corresponding to the plurality of preset index values.

In this embodiment of the present disclosure, the mapping parameters corresponding to the preset data interval are set, so that the quantization input data of the preset data interval may be mapped to the preset index data range, thus facilitating a table lookup operation for a large number of quantization input data through table entries with a small number of preset index values, thereby effectively reducing the table entry storage pressure of the table lookup operation.

In some optional embodiments, step 2033 of determining, the target quantization output value corresponding to the quantization input data, based on the target index value and the quantization output values respectively corresponding to the plurality of preset index values in the index information may include:

in response to the target index value belonging to a target preset index value in the plurality of preset index values, determining, as the target quantization output value, a quantization output value corresponding to the target preset index value; or in response to the target index value not belonging to the plurality of preset index values, determining a first preset index value and a second preset index value that are adjacent to the target index value in the plurality of preset index values; and determining, a quantization output value corresponding to the target index value as the target quantization output value, based on the target index value, the first preset index value, the second preset index value, a first quantization output value corresponding to the first preset index value, and a second quantization output value corresponding to the second preset index value.

If the target index value is exactly a preset index value, a quantization output value corresponding to the preset index value may be directly obtained, as the target quantization output value, through table lookup. If the target index value is not any preset index value, it indicates that the target index value falls between two adjacent preset index values. Because the index information (that is, the table entry) includes only the quantization output values respectively corresponding to the preset index values, the quantization output value corresponding to the target index value needs to be determined, based on an interpolation, as the target quantization output value. The interpolation process is to determine, from the plurality of preset index values, the first preset index value and the second preset index value that are adjacent to the target index value based on the target index value, that is, the target index value falls between the first preset index value and the second preset index value. Interpolation may be performed for the first quantization output value corresponding to the first preset index value and the second quantization output value corresponding to the second preset index value based on a position of the target index value between the first preset index value and the second preset index value, and the quantization output value corresponding to the target index value obtained by quantization may be determined as the target quantization output value.

Exemplarily, the plurality of preset index values corresponding to the table lookup region are 0 to 63, and the target index value is a real number (including an integer part and a decimal part) within [0, 63]. The integer part is extracted from the target index value to obtain the first preset index value (for example, *i*), and the second preset index value *i* + 1 may be obtained by adding 1 to the first preset index value. For example, the target index value is 21.67. It may be determined that the first preset index value is 21 and the second preset index value is 22. If the first quantization output value corresponding to the first preset index value is represented by $A_{21}$, and the second quantization output value corresponding to the second preset index value is represented by $A_{22}$, interpolation and quantization are performed based on a position of 21.67 between 21 and 22 (equivalent to a position of 0.67 between 0 and 1) to obtain the quantization output value **y,** corresponding to the target index value, that may be expressed as follows:

14

$$y = clamp\left(round\left((1 - 0.67) * A_{21} + 0.67 * A_{22}\right)\right) \qquad \text{Formula 11}$$

where for *clamp*() and *round*(), reference may be made to the above-mentioned embodiment.

In this embodiment, for the target index value not falling onto the preset index value, the quantization output value corresponding to the target index value is obtained by interpolation, so that a table lookup operation for a large amount of quantization input data may be implemented through a relatively small number of table entries, thereby reducing the storage pressure of the table entries while improving computing efficiency, thus making it easier to deploy the neural network model on a terminal side.

FIG. 7 is a schematic flowchart illustrating a quantization method for a neural network model according to still another exemplary embodiment of the present disclosure.

In some optional embodiments, the index information corresponding to each of the table lookup regions in the plurality of preset data intervals includes the quantization output values respectively corresponding to the plurality of preset index values; and as shown in FIG. 7, based on the embodiment shown in FIG. 2 above, the method of this embodiment of the present disclosure may further include:

Step 401: Determining, for any table lookup region in the plurality of preset data intervals, the index information corresponding to the table lookup region.

A process of determining the index information corresponding to the table lookup region is a process of determining the quantization output values corresponding to the plurality of preset index values corresponding to the table lookup region.

In some optional embodiments, operator output values of the quantization operator at quantization input values corresponding to the preset index values may be used as the quantization output values respectively corresponding to the preset index values. That is, for each of the preset index values, a quantization input value corresponding to the preset index value is determined based on a mapping relationship between the quantization input data and the preset index value, the quantization input value is substituted into the quantization operator, an operator output value is obtained through calculation, and the operator output value is used as a quantization output value corresponding to the preset index value. The preset index values corresponding to the table lookup region and the quantization output values respectively corresponding to the preset index values are determined as the index information corresponding to the table lookup region, and the index information may be stored for subsequent table lookup operations. Based on this, the index information corresponding to each table lookup region may be determined

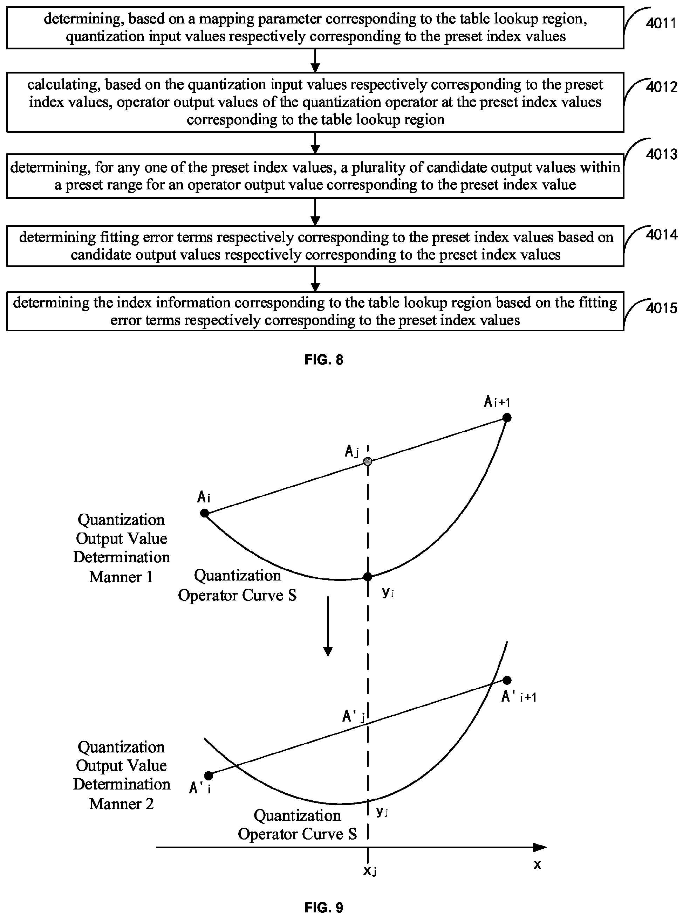

FIG. 8 is a schematic flowchart illustrating determining of index information for a table lookup region according to an exemplary embodiment of the present disclosure. As shown in FIG. 8, step 401 of determining, for any table lookup region in the plurality of preset data intervals, the index information corresponding to the table lookup region may include the following steps:

Step 4011: Determining, based on a mapping parameter corresponding to the table lookup region, quantization input values respectively corresponding to the preset index values.

A process of determining the quantization input values respectively corresponding to the preset index values is a reverse mapping process of Formula 10 described above, details of which are not described.

Step 4012: Calculating, based on the quantization input values respectively corresponding to the preset index values, operator output values of the quantization operator at the preset index values corresponding to the table lookup region.

The operator output values respectively corresponding to the preset index values are calculated by using the quantization input values respectively corresponding to the preset index values as inputs of the quantization operator.

Step 4013: Determining, for any one of the preset index values, a plurality of candidate output values within a preset range for an operator output value corresponding to the preset index value.

The preset range for the operator output value corresponding to the preset index value may be set, according to actual needs, to be any range including the operator output value. For example, the operator output value corresponding to the preset index value is *y,* and the preset range for the operator output value may be expressed as **[y - m, y + n],** where *m* and *n* are both integers greater than or equal to 0. *m* and *n* may be equal or not. For example, *m* = *n* = **5000.**

For each preset index value, a candidate output value corresponding to the preset index value represents a value, within the preset range for the operator output value corresponding to the preset index value, that is possibly used as the quantization output value corresponding to the preset index value.

In some optional embodiments, the preset range may be expressed as $\pm$D, where D is a positive integer. Using D=5000 as an example, the plurality of preset index values are 0, 1, ..., and M in ascending order, each of the preset index values is used as a current preset index value sequentially, and the current preset index value is represented by *i* (*i* =0, 1, ..., M). In this case, a *j*th candidate output value $A_i^j$ corresponding to *i* may be expressed as:

$$A_i{}^j = base_i + j - D \qquad \text{Formula 12}$$

**where** $j$ = **0, 1,** ..., **2D,** and $base_i$ represents an operator output value corresponding to the current preset index value $i$. In this case, the number of candidate output values corresponding to the current preset index value $i$ is 2D.

Step 4014: Determining fitting error terms respectively corresponding to the preset index values based on candidate output values respectively corresponding to the preset index values.

A fitting error term corresponding to any one of the preset index values includes a fitting error corresponding to each of the candidate output values for the preset index value.

In some optional embodiments, the preset index values may be sequentially used as a current preset index value in a preset order, and a fitting error term corresponding to the current preset index value is determined. The preset order may be an ascending order or a descending order of the preset index values, which is not specifically limited.

In some optional embodiments, the fitting error term corresponding to the current preset index value includes a fitting error for each candidate output value corresponding to the current preset index value. Each candidate output value is used as a target candidate output value. A fitting error corresponding to the target candidate output value includes a cumulative error of an error of a fitting line segment between the target candidate output value and each candidate output value (which may be referred to as a historical candidate output value) for a previous preset index value relative to the quantization operator, and a fitting error corresponding to the historical candidate output value. The error of the fitting line segment between the target candidate output value and each historical candidate output value relative to the quantization operator may be determined by a fitting value, of each target quantization input value mapped to between the current preset index value and the previous preset index value, on the fitting line segment and an operator output value of the same on the quantization operator. The fitting error for the historical candidate output value is obtained through calculation when the previous preset index value is used as the current preset index value. For example, the candidate output value for the current preset index value $i$ is $A_i{}^j$, a fitting error for $A_{i-1}{}^k$ is denoted as $dp_{i-1,k}$, and the fitting error for $A_i{}^j$ is a cumulative error of an error of a fitting line segment between $A_i{}^j$ and $A_{i-1}{}^k$ relative to the quantization operator, and the fitting error $dp_{i-1,k}$.

That is, the fitting error term may be represented as a tensor with a certain data structure, such as an array or a matrix, and each element in the tensor represents a cumulative error from a candidate output value for the previous preset index value to a candidate output value for the current preset index value.

Step 4015: Determining the index information corresponding to the table lookup region based on the fitting error terms respectively corresponding to the preset index values.

After the fitting error terms respectively corresponding to the preset index values are obtained, the fitting error terms respectively corresponding to the preset index values may be considered comprehensively to determine index information that satisfies an error condition. The error condition may be a condition that minimizes a total fitting error.

In some optional embodiments, step 4011 to step 4015 may determine the index information corresponding to the table lookup region based on a dynamic path planning manner, which involves finding an optimal path of a plurality of fitting line segments (paths) with a smallest cumulative error (cost) from a smallest preset index value to a greatest preset index value (or from the greatest preset index value to the smallest preset index value). The fitting error term records cost values of various possible choices in the path search process. The optimal path is found by minimizing an overall path cost value. Based on the optimal path, starting from the last preset index value, a corresponding quantization output value is determined, and the quantization output values for all the preset index values are sequentially obtained by backtracking along the optimal path.

The quantization output values respectively corresponding to the preset index values are formed into table entries, as the index information corresponding to the table lookup region, according to a certain data structure.

Based on the process described above, the index information corresponding to each table lookup region may be obtained. The index information corresponding to the table lookup regions is stored correspondingly for subsequent table lookup operations, such as deployment to a terminal device, to facilitate inference acceleration of the neural network model.

In some optional embodiments, FIG. 9 is a schematic diagram illustrating comparison between two manners of determining a quantization output value according to an exemplary embodiment of the present disclosure. As shown in FIG. 9, a portion of a quantization operator curve S between two preset index values i and i+1 is a concave curve (which is similar for a convex curve). For the two preset index values, a quantization output value determination manner 1 (manner 1 for short) is to use operator output values of the quantization operator as quantization output values $A_i$ and $A_{i+1}$ that correspond to the preset index values; and a quantization output value determination manner 2 (manner 2 for short) is to obtain quantization output values $A'_i$ and $A'_{i+1}$ within a certain range of corresponding operator output values by minimizing the overall fitting error in this embodiment. It may be seen that for a concave curve segment, when a quantization output value of a concave portion is determined by table lookup interpolation, the quantization output value obtained by manner 2 of minimizing the fitting error may reduce an error between a table lookup result of the concave portion and an actual operator output value. As shown in the figure, at the quantization input value $x_j$, the quantization output value obtained by interpolation in manner 1 is represented by $A_j$, the operator output value is represented by $y_j$, and the quantization output value obtained by interpolation in manner 2 is A'$_j$. Obviously, |A'$_j$ - y$_j$| < |A$_j$ - y$_j$|, and there are only relatively small errors at the preset index values at two ends. Furthermore, there is also a part, in which the quantization output value obtained through interpolation is the same as the operator output value, between the two preset index values. It may be seen that manner 2 may improve the overall table lookup accuracy.

In this embodiment of the present disclosure, determining of the index information of the table lookup region by the fitting error terms respectively corresponding to the preset index values may balance the overall table lookup accuracy of the quantization operator and solve a problem of extremely low table lookup accuracy in the concave curve segment or the convex curve segment of the quantization operator easily caused by use of the operator output values as the quantization output values corresponding to the preset index values.

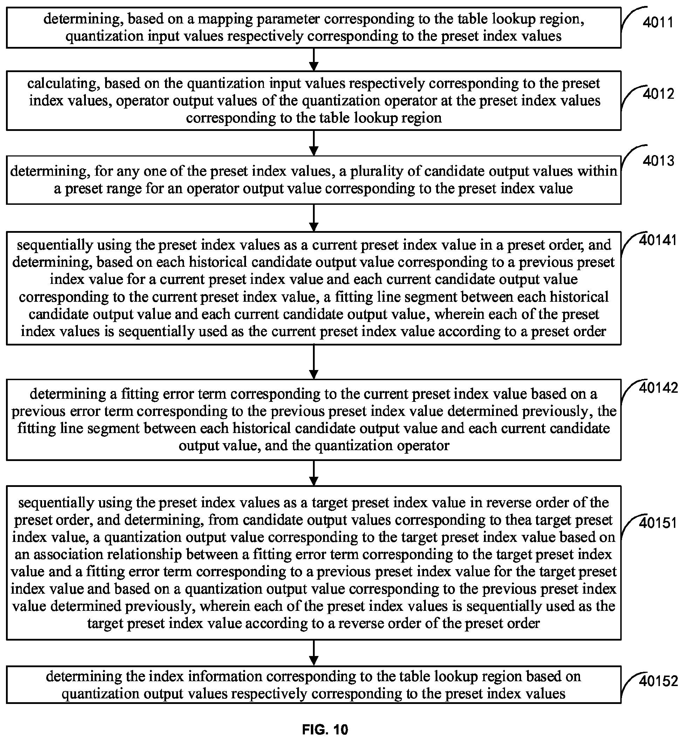

FIG. 10 is a schematic flowchart illustrating determining of index information for a table lookup region according to another exemplary embodiment of the present disclosure.

In some optional embodiments, as shown in FIG. 10, step 4014 of determining fitting error terms respectively corresponding to the preset index values based on candidate output values respectively corresponding to the preset index values may include:

Step 40141: determining, based on each historical candidate output value corresponding to a previous preset index value for a current preset index value and each current candidate output value corresponding to the current preset index value, a fitting line segment between each historical candidate output value and each current candidate output value, wherein each of the preset index values is sequentially used as the current preset index value according to a preset order.

The preset order may be an ascending order or a descending order of the preset index values. The previous preset index value for the current preset index value is a preset index value adjacent to the current preset index value, and specifically, may be determined according to the preset order of traversing the preset index values. For example, in ascending order of the preset index values, the previous preset index value for the current preset index value is a preset index value adjacent to the current preset index value and smaller than the current preset index value. If the current preset index value is represented by *i,* the previous preset index value is *i - 1.* In descending order of the preset index values, the previous preset index value for the current preset index value is a preset index value adjacent to the current preset index value and larger than the current preset index value. If the current preset index value is represented by *i,* the previous preset index value is *i + 1.*

Each candidate output value corresponding to the previous preset index value is referred to as a historical candidate output value, and each candidate output value corresponding to the current preset index value is referred to as a current candidate output value. Using the ascending order as an example, a fitting line segment between each current candidate output value $A_i^j$ *(j = 0,1, ..., 2D)* and each historical candidate output value $A_{i-1}^k$ *(k = 0,1, ..., 2D)* is determined, where each historical candidate output value is determined when the previous preset index value is used as the current preset index value.

In some optional embodiments, when the current preset index value is a first preset index value among the plurality of preset index values (for example, the smallest preset index value in the ascending order or the greatest preset index value in the descending order), the fitting error term corresponding to the current preset index value may include an error between each candidate output value for the current preset index value and the operator output value for the current preset index value. That is, because there is no previous preset index value, the error is only generated by a difference between the candidate output value and the operator output value.

In some optional embodiments, for each current candidate output value corresponding to the current preset index value, each historical candidate output value corresponding to the previous preset index value may be linearly fitted with the current candidate output value to obtain a fitting line segment between the current candidate output value and the historical candidate output value. That is, point $(i - 1, A_{i-1}^k)$ and point $(i, A_i^j)$ are fitted into a line segment, as the fitting line segment between the current candidate output value $A_i^j$ and $A_{i-1}^k$. Based on this, the fitting line segment between each current candidate output value $A_i^j$ and each historical candidate output value $A_{i-1}^k$ may be obtained, and may be expressed as $l_i^{k \to j}$.

Step 40142: Determining a fitting error term corresponding to the current preset index value based on a previous error term corresponding to the previous preset index value determined previously, the fitting line segment between each historical candidate output value and each current candidate output value, and the quantization operator.

The previous error term corresponding to the previous preset index value is a fitting error term corresponding to the previous preset index value. "Determined previously" refers to being determined during the process of using the previous preset index value as the current preset index value. That is, when the previous preset index value is traversed according to the preset order, the fitting error term corresponding to the previous preset index value is determined, according to the process from step 40141 to step 40142, as the previous error term of the current preset index value. The previous error term corresponding to the previous preset index value includes the fitting error corresponding to each historical candidate output value for the previous preset index value, which is similar to the fitting error term for the current preset index value and description of which is not repeated herein. The error of the fitting line segment relative to the quantization operator may be determined based on the quantization operator and the fitting line segment between each historical candidate output value and each current candidate output value, and then, the fitting error term corresponding to the current preset index value is determined in conjunction with the previous error term.

Exemplarily, the previous error term may be expressed as $dp_{i-1,k}$, and the fitting error term corresponding to the current preset index value may be expressed as $dp_{i,j}$. $dp_{i,j}$ is the cumulative error of $dp_{i-1,k}$ and the error of the fitting line segment between $A_i^j$ and $A_{i-1}^k$ relative to the quantization operator.

The error between the quantization operator and the fitting line segment between each current candidate output value and each historical candidate output value may be determined by an error between a fitting value, of each quantization input value mapped to between the previous preset index value and the current preset index value, on the fitting line segment and an operator output value of the same on the quantization operator. That is, the error between the fitting line segment and the quantization operator is a sum of errors between the fitting values corresponding to the quantization input values and the operator output values. The error between the fitting value for the quantization input value and the operator output value may be represented as an absolute value or a square of a difference between the fitting value and the corresponding operator output value. A specific error representation manner is not limited.

In this embodiment, a cumulative cost value for various possible fitting paths from a starting preset index value to a current preset index value may be accurately obtained based on a previous error term and an error of a fitting line segment between each current candidate output value for the current preset index value and each historical candidate output value for a previous preset index value relative to the quantization operator, so that after a fitting error term corresponding to an ending preset index value is recursively obtained, a candidate output value that minimizes a fitting error may be effectively obtained as a quantization output value of the ending preset index value, thereby improving overall table lookup accuracy by minimizing an overall fitting error.

In some optional embodiments, step 40142 of determining a fitting error term corresponding to the current preset index value based on a previous error term corresponding to the previous preset index value determined previously, the fitting line segment between each historical candidate output value and each current candidate output value, and the quantization operator may include:

calculating, based on the quantization operator, operator output values respectively corresponding to target quantization input values mapped to between the current preset index value and the previous preset index value; determining, for the fitting line segment between each historical candidate output value and each current candidate output value, respective fitting values for the target quantization input values on the fitting line segment based on the fitting line segment; and determining the fitting error term corresponding to the current preset index value based on the previous error term, the operator output values respectively corresponding to the target quantization input values, and the fitting values for the target quantization input values on the respective fitting line segments.

The target quantization input values mapped to between the current preset index value and the previous preset index value may be determined based on the mapping formula of the above-mentioned Formula 10. For example, a first quantization input value corresponding to the previous preset index value and a second quantization input value corresponding to the current preset index value may be determined. The first quantization input value and the second quantization input value may represent boundary values of quantization input values that may be mapped to between the current preset index value and the previous preset index value. Each quantization input value within a range from the first quantization input value to the second quantization input value is the target quantization input value mapped to between the preset index value and the previous preset index value. The operator output values respectively corresponding to the target quantization input values are calculated by the quantization operator. For the fitting line segment between each current candidate output value and each historical candidate output value, respective fitting values for the target quantization input values on the fitting line segment are determined based on the fitting line segment. Then, a sum of errors for all the fitting values between the current candidate output value and the historical candidate output value may be calculated based on the errors between the operator output values and the fitting values in combination with the fitting error corresponding to the historical candidate output value in the previous error term, to obtain a total fitting error corresponding to each of the candidate output values.

The process of determining the quantization output values corresponding to the preset index values is a process of determining a fitting path that minimizes the overall fitting error. A recursive process of the fitting error term may be expressed as:

$$dp_{i,j} = \min_k \{ dp_{i-1,k} + \sum_{\{x|index(x)\in[i-1,i)\}} (f(x) - g(x))^2 \} \qquad \text{Formula 13}$$

where $f(x)$ represents an operator output value for a target quantization input value $x$ on the quantization operator, $g(x)$ represents a fitting value for x on the fitting line segment, and $\min_k\{\}$ means solving $k$ that minimizes $dp_{i,j}$. $k = 0, 1, ..., 2D$. $j = 0, 1, ..., 2D$. $i = 0, 1, ..., M - 1$, M being a number of preset index values. $dp_{i-1,k}$ represents the previous error term. For each

*J* for the current preset index value *i*, *k* = 0,1, ..., 2*D* is traversed to determine and store $dp_{i,j}$ under each historical candidate output value, and *k* that minimizes $dp_{i,j}$ may be found. Based on this, a fitting error corresponding to each of the candidate output values for the current preset index value *i* may be obtained. *i* = 0,1, ..., *M* - 1 is traversed through Formula 13, a fitting error term corresponding to the preset index value *M* - 1 is finally obtained, and the fitting error term corresponding to the preset index value *M* - 1 is equivalent to a cumulative error of all fitting paths including the preset index values from 0 to *M* - 1. Based on $dp_{M-1,j}$, *J* with a smallest error and an optimal fitting path corresponding to *j* with the smallest error are found, and based on *j* with the smallest error, a quantization output value corresponding to *M* - 1 may be obtained. The quantization output value corresponding to each preset index value is obtained by reverse search through the optimal fitting path.

In this embodiment, the error of the fitting line segment is accurately calculated based on the fitting value and operator output value for each target quantization input value mapped to between the current preset index value and the previous preset index value and the previous error term, the cumulative error of the fitting path is effectively obtained, so that the quantization output value of each preset index value is effectively determined through a dynamic path planning manner, thereby minimizing the overall fitting error for the quantization output values for the preset index values, and thus effectively improving table lookup accuracy.

In some optional embodiments, as shown in FIG. 10, step 4015 of determining the index information corresponding to the table lookup region based on the fitting error terms respectively corresponding to the preset index values may include the following steps:

Step 40151: determining, from candidate output values corresponding to a target preset index value, a quantization output value corresponding to the target preset index value based on an association relationship between a fitting error term corresponding to the target preset index value and a fitting error term corresponding to a previous preset index value for the target preset index value and based on a quantization output value corresponding to the previous preset index value determined previously, wherein each of the preset index values is sequentially used as the target preset index value according to a reverse order of the preset order.

As it is in the reverse order of the preset order of determining the fitting error term, if the preset order is an ascending order, the reverse order is a descending order. That is, first, a preset index value (for example, the greatest preset index value *M* - 1) of a fitting error term determined lastly is used as the target preset index value, and based on the fitting error term $dp_{M-1,j}$ for the target preset index value, *j* with a smallest error and an optimal fitting path (that is, an optimal choice path) corresponding to *j* with the smallest error are found. Based on *j* with the smallest error, the quantization output value corresponding to *M* - 1 may be obtained. The quantization output value corresponding to each preset index value is obtained by reverse search through the optimal fitting path.

Step 40152: Determining the index information corresponding to the table lookup region based on quantization output values respectively corresponding to the preset index values.

In this embodiment, an optimal choice path for quantization output values from a starting preset index value to an ending preset index value is obtained recursively according to a preset order, and then an optimal candidate output value corresponding to each preset index value on the optimal choice path is obtained by reverse deduction, so that a sum of fitting errors for the quantization output values for all the preset index values is minimized, thereby maximizing overall table lookup accuracy of the table lookup region and effectively improving the overall table lookup accuracy.

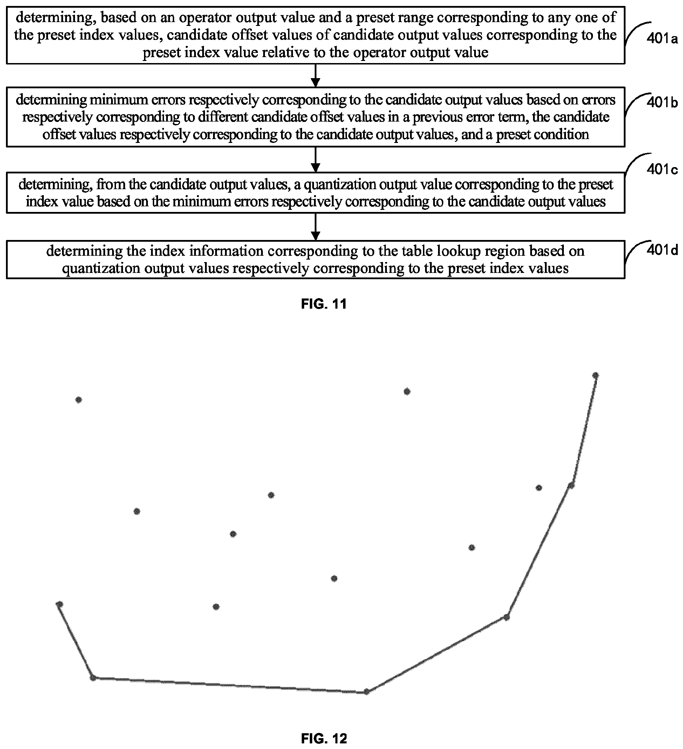

FIG. 11 is a schematic flowchart illustrating determining of index information for a table lookup region according to still another exemplary embodiment of the present disclosure.

In some optional embodiments, the index information corresponding to each of the table lookup regions in the plurality of preset data intervals includes the quantization output values respectively corresponding to the plurality of preset index values. As shown in FIG. 11, step 401 of determining, for any table lookup region in the plurality of preset data intervals, the index information corresponding to the table lookup region includes the following steps:

Step 401a: determining, based on an operator output value and a preset range corresponding to any one of the preset index values, candidate offset values of candidate output values corresponding to the preset index value relative to the operator output value.

Each preset index value is used as the current preset index value, and a candidate offset value, of each candidate output value corresponding to the current preset index value, relative to the operator output value refers to *j* in the above-mentioned Formula 12.

Step 401b: Determining minimum errors respectively corresponding to the candidate output values based on errors respectively corresponding to different candidate offset values in a previous error term, the candidate offset values respectively corresponding to the candidate output values, and a preset condition.

The preset conditions may be determined based on specific characteristics of the recursive process of the above-mentioned Formula 13. The determination process is as follows:

Let $\lambda(x) = index(x) - i - 1$, $\mu(x) = 1 - \lambda(x)$, to help calculate the interpolation, where *i* represents the current preset index value, *index(x)* represents a target index value corresponding to the target quantization input value x, and a fitting value *g(x)*, corresponding to x, that is obtained by interpolation is expressed as follows:

$$g(x) = a_i * \lambda(x) + a_{i+1} * \mu(x) \quad \text{Formula 14}$$

where $a_i$ represents a quantization output value corresponding to $i$, and $a_{i+1}$ represents a quantization output value corresponding to $i + 1$. At this time, $a_i$ and $a_{i+1}$ are not yet determined, but are used only for derivation.

Substitute Formula 14 into the above-mentioned Formula 13 and simplify it to obtain:

$$dp_{i,j} = \min_k \{ dp_{i-1,k} + (\textstyle\sum \lambda(x)^2) j^2 + (\textstyle\sum 2\lambda(x)c(x)) j + (\textstyle\sum \mu(x)^2) k^2 + (\textstyle\sum 2\mu(x)c(x)) k +$$
$$(\textstyle\sum 2\lambda(x)\mu(x)) jk + \textstyle\sum c(x)^2 \}$$

Formula 15

where $c(x) = base_{i-1} + base_i - D - f(x)$. It may be seen that $c(x)$ is a function that is related only to x and not related to $j$ and $k$. Two choices $k_1$ and $k_2$ for $dp_{i,j}$ and $k$ may be obtained. When $k_1 > k_2$, a necessary and sufficient condition for choosing $k_1$ over $k_2$ is:

$$dp_{i-1,k_1} + (\textstyle\sum \lambda(x)^2) j^2 + (\textstyle\sum 2\lambda(x)c(x)) j + (\textstyle\sum \mu(x)^2) k_1{}^2 + (\textstyle\sum 2\mu(x)c(x)) k_1 + (\textstyle\sum 2\lambda(x)\mu(x)) jk_1 +$$
$$\textstyle\sum c(x)^2 < dp_{i-1,k_2} + (\textstyle\sum \lambda(x)^2) j^2 + (\textstyle\sum 2\lambda(x)c(x)) j + (\textstyle\sum \mu(x)^2) k_2{}^2 + (\textstyle\sum 2\mu(x)c(x)) k_2 + (\textstyle\sum 2\lambda(x)\mu(x)) jk_2 +$$
$$\textstyle\sum c(x)^2$$

Formula 16

Simplifying repeated terms of Formula 16 may obtain:

$$dp_{i-1,k_1} + (\textstyle\sum \mu(x)^2) k_1{}^2 + (\textstyle\sum 2\mu(x)c(x)) k_1 + (\textstyle\sum 2\lambda(x)\mu(x)) jk_1 < dp_{i-1,k_2} + (\textstyle\sum \mu(x)^2) k_2{}^2 +$$
$$(\textstyle\sum 2\mu(x)c(x)) k_2 + (\textstyle\sum 2\lambda(x)\mu(x)) jk_2$$

Formula 17

The coefficients in Formula 17 are expressed by symbols and simplified as follows:

$$dp_{i-1,k_1} + A_1 k_1{}^2 + A_2 k_1 + A_3 jk_1 < dp_{i-1,k_2} + A_1 k_2{}^2 + A_2 k_2 + A_3 jk_2 \qquad \text{Formula 18}$$

where $A_1 = \Sigma\mu(x)^2$, $A_2 = \Sigma 2\mu(x)c(x)$, and $A_3 = \Sigma 2\lambda(x)\mu(x)$.

Combining similar terms in Formula 18 obtains:

$$(dp_{i-1,k_1} + A_1 k_1{}^2 + A_2 k_1) - (dp_{i-1,k_2} + A_1 k_2{}^2 + A_2 k_2) < A_3 j(k_2 - k_1)$$

Formula 19

Transforming Formula 19 obtains:

$$\frac{(dp_{i-1,k_1} + A_1 k_1{}^2 + A_2 k_1) - (dp_{i-1,k_2} + A_1 k_2{}^2 + A_2 k_2)}{k_1 - k_2} < -A_3 j$$

Formula 20

Referring to Formula 20, it may be seen that Formula 20 is similar to an expression for calculating a slope. That is, for $dp_{i,j}$, if each possible decision $k$ is used as a point $(k, dp_{i-1,k} + A_1 k^2 + A_2 k)$ on a plane, for a given $j$, $dp_{i-1,k}$, $A_1$, $A_2$, and $A_3$ are all constants, and only $k$ is a variable. In this case, a necessary and sufficient condition for making a decision (that is, choosing) that $k_1$ is better than $k_2$ is $k_1 > k_2$, a slope of a line connecting a point corresponding to $k_1$ and a point

corresponding to $k_2$ is less than $-A_3j$, and $A_3$ is related only to $i$ and is not related to $j$ and $k$. Therefore, when $i$ is determined, $A_3$ is a constant, and $j$ may cycle in ascending order. Therefore, as $j$ cycles, the value of $-A_3j$ may changes in descending order. Based on this, all possible decisions $k = 0, 1, ..., 2D$ may be converted into points on the plane in the above-mentioned manner. In this case, for each $j$, a most suitable point P needs to be chosen. In other words, there is no other point P' that satisfies the following conditions: point P' is on the left side of point P and a slope of a line connecting P' and P is greater than $-A_3j$. A condition for choosing the most suitable point $P$ is used as the preset condition. According to the above-mentioned conditions, it may be obtained that the point that may serve as an optimal decision inevitably falls on a lower convex hull, and the lower convex hull represents a convex hull with increasing slopes of lines connecting adjacent points. FIG. 12 is a schematic diagram illustrating a lower convex hull according to an exemplary embodiment of the present disclosure. As shown in FIG. 12, each point therein represents a possible decision $k$, and a lower polyline below is the lower convex hull. For all $j$, the optimal decision $k$ for $dp_{i,j}$ is definitely a point on the lower convex hull. In this way, the complexity of searching for $k$ for a $j$ may be reduced, from traversing 0(n) of each $k$, to O (1), thereby greatly reducing the complexity of dynamic planning. That is, each query for $dp_{i,j}$ is to find a first point whose slope of a line connecting the point and a following point is greater than $-A_3j$, and this point is the optimal decision $k$ for $dp_{i,j}$. Because the cycle of $j$ is in ascending order, $A_3$ is positive, and $-A_3j$ is in descending order, the point corresponding to the optimal decision $k$ always moves from right to left on the convex hull. According to amortization analysis, it may be determined that the complexity of solving the optimal decision k each time is O(1).

Based on the above-mentioned content, the optimal decision $k$ for $dp_{i,j}$ may be determined based on errors (which are obtained constants) $dp_{i-1,k}$ respectively corresponding to different candidate offset values in the previous error term, the candidate offset values respectively corresponding to the candidate output values, and the above-mentioned preset condition. The error $dp_{i,j}$ corresponding to the optimal decision $k$ is the minimum error for the candidate output value corresponding to $j$.

Step 401c: Determining, from the candidate output values, a quantization output value corresponding to the preset index value based on the minimum errors respectively corresponding to the candidate output values.

After the minimum errors respectively corresponding to the candidate output values are obtained, a candidate output value with the smallest minimum error may be determined as the quantization output value corresponding to the preset index value.

Step 401d: Determining the index information corresponding to the table lookup region based on quantization output values respectively corresponding to the preset index values.

In this embodiment, the search complexity may be reduced and the efficiency of determining the quantization output value of the preset index value may be improved by converting the complex dynamic planning process into a process of searching for the minimum error for the candidate output value based on the preset condition.

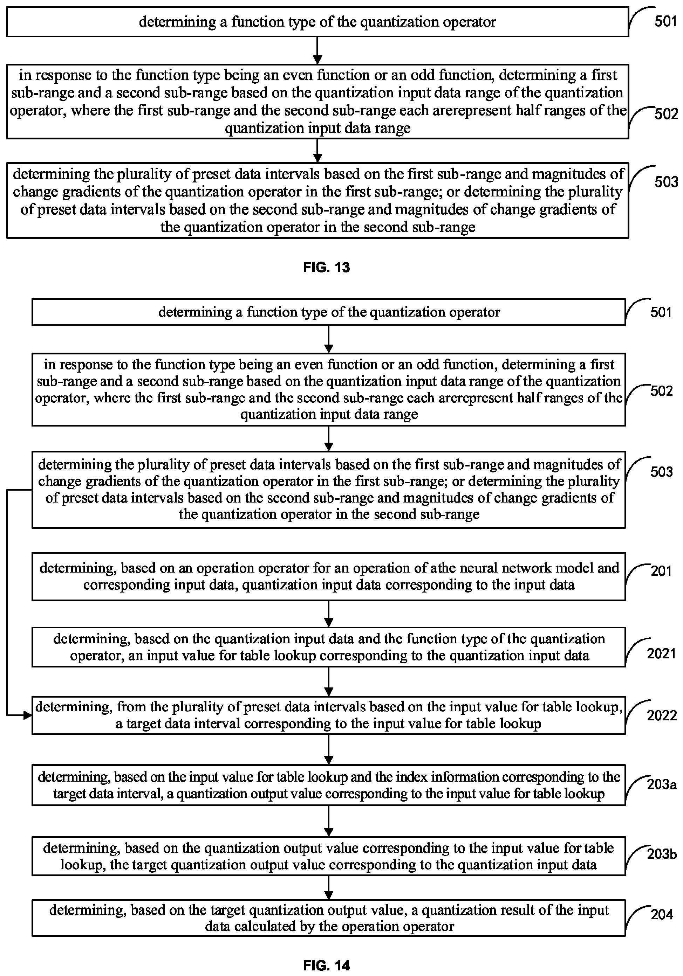

FIG. 13 is a schematic flowchart illustrating determining of a plurality of preset data intervals according to yet another exemplary embodiment of the present disclosure.

In some optional embodiments, as shown in FIG. 13, based on the embodiment shown in FIG. 2, the plurality of preset data intervals may be obtained by:

Step 501: Determining a function type of the quantization operator.

The function type includes an even function and an odd function. That is, the quantization operator satisfies a condition of axisymmetry or center symmetry.

Step 502: In response to the function type being an even function or an odd function, determining a first sub-range and a second sub-range based on the quantization input data range of the quantization operator, where the first sub-range and the second sub-range each are a half range of the quantization input data range.

If the function type is an even function or an odd function, the quantization input data range of the quantization operator may be segmented into the first sub-range and the second sub-range based on symmetry of the even function and the odd function.

Exemplarily, for an even function, $f(x) = f(-x)$ is satisfied, and segmentation is performed at x = 0. In this case, the quantization input data range is segmented into a first sub-range less than 0 and a second sub-range greater than 0. For an odd function, $f(x) = -f(-x)$ is satisfied, and segmentation may also be performed at $x = 0$. In this case, the quantization input data range may be segmented into a first sub-range less than 0 and a second sub-range greater than 0.

Step 503: Determining the plurality of preset data intervals based on the first sub-range and magnitudes of change gradients of the quantization operator in the first sub-range; or determining the plurality of preset data intervals based on the second sub-range and magnitudes of change gradients of the quantization operator in the second sub-range.

After the quantization input data range is segmented into the first sub-range and the second sub-range, it is possible, due to the symmetry of the quantization operator, to tabulate only one of the first sub-range and the second sub-range (that is, determine index information corresponding to the sub-range). Using tabulation of the first sub-range as an example, a quantization output value corresponding to a quantization input value within the first sub-range is obtained through table lookup, while for a quantization input value within the second sub-range, a quantization output value corresponding to the quantization input value of the second sub-range is obtained through conversion to the table lookup operation for the first sub-range according to the symmetry of the quantization operator. Using the odd function as an example, for an odd function of the int16 type, only [-32768, 0] is tabulated. For the quantization input value x, if x is greater than 0, x may be changed to -x, and after the quantization output value y is obtained through the index information corresponding to the plurality of preset data intervals of [-32768, 0], -y is used as the quantization output value corresponding to x.

In some optional embodiments, for the specific principle of determining the plurality of preset data intervals of the first sub-range or the second sub-range, reference may be made to the principle of determining the plurality of preset data intervals for the quantization input data range in any one of the above-mentioned embodiments, details of which are not repeated herein one by one.

In some optional embodiments, the function type may alternatively include other functions that satisfy an axisymmetric condition in addition to the odd function and the even function, such as a symmetric function whose symmetry axis is not a y axis (for example, the symmetry axis is x = *a,* and *a* is a constant greater than 0). The quantization input data range may be segmented based on the symmetry axis to obtain the first sub-range and the second sub-range. Tabulation is performed for the first sub-range or the second sub-range, and for table lookup, full-range table lookup under partial-range tabulation is implemented based on a corresponding symmetric relationship.

In this embodiment of the present disclosure, for an odd function or an even function, tabulation for only one of a first sub-range and a second sub-range is performed by segmenting the quantization input data range, and it is equivalent to reducing the quantization input data range for tabulation. When the number of preset data intervals and the number of preset index values of each preset data interval remain unchanged, it is equivalent to expanding table entries. For example, originally, 65536 results of int16 are fitted by 64*8=512 quantization output values. In this embodiment, the half-range tabulation may achieve fitting of half of the results of int16 by 512 quantization output values, and for the half of the range, it is equivalent to doubling the table entries. At the same time, for the other half of the range, corresponding quantization output values may be determined by a table lookup operation by the table entries of the half range. Therefore, the table lookup accuracy may be effectively improved.

FIG. 14 is a schematic flowchart illustrating a quantization method for a neural network model according to yet another exemplary embodiment of the present disclosure.

In some optional embodiments, as shown in FIG. 14, step 202 of determining a target data interval corresponding to the quantization input data from a plurality of preset data intervals may include the following steps:

Step 2021: Determining, based on the quantization input data and the function type of the quantization operator, an input value for table lookup corresponding to the quantization input data.

For an odd function and an even function, if the quantization input data is within a sub-range of tabulation, the quantization input data may be used as an input value for table lookup. If the quantization input data does not belong to the sub-range of the tabulation, each input value for table lookup corresponding to the quantization input data is a negative value of the quantization input data. To be specific, if the quantization input data is x, the input value for table lookup is -x.

Step 2022: Determining, from the plurality of preset data intervals based on the input value for table lookup, a target data interval corresponding to the input value for table lookup.

For a specific operation of this step, refer to the specific operation of step 202 in the above-mentioned embodiment.

Step 203 of determining a target quantization output value corresponding to the quantization input data based on the quantization input data and index information corresponding to the target data interval may include the following steps:

Step 203a: Determining, based on the input value for table lookup and the index information corresponding to the target data interval, a quantization output value corresponding to the input value for table lookup.

For a specific operation of this step, refer to the specific operation of step 203 described above.

Step 203b: Determining, based on the quantization output value corresponding to the input value for table lookup, the target quantization output value corresponding to the quantization input data.

When the quantization input data belongs to the sub-range of the tabulation (such as the first sub-range or the second sub-range for the index information of the plurality of preset data intervals that have been determined), the quantization output value corresponding to the input value for table lookup is the target quantization output value corresponding to the quantization input data. For a case where the quantization input data does not belong to the sub-range of the tabulation, for an odd function, the target quantization output value corresponding to the quantization input data is a negative value of the quantization output value corresponding to the input value for table lookup. For an even function, the quantization output value corresponding to the input value for table lookup is the target quantization output value corresponding to the quantization input data. This may be determined specifically based on the symmetry of the odd function or the even function.

In this embodiment of the present disclosure, in the case of half-range tabulation, a table lookup operation for the entire quantization input data range may be implemented based on half-range table entries, so that table lookup accuracy is effectively improved while computing efficiency is ensured.

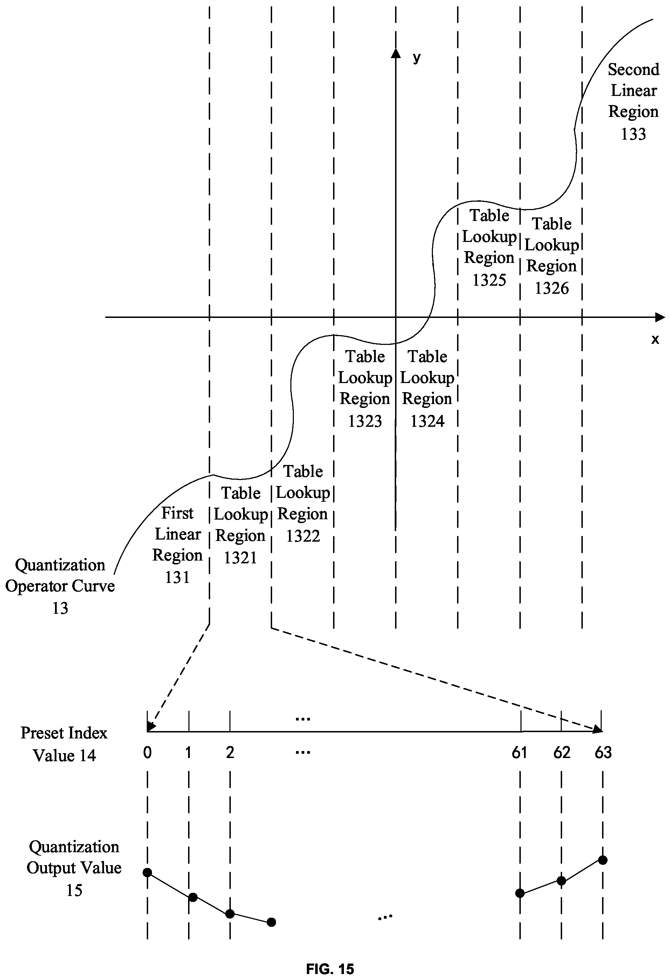

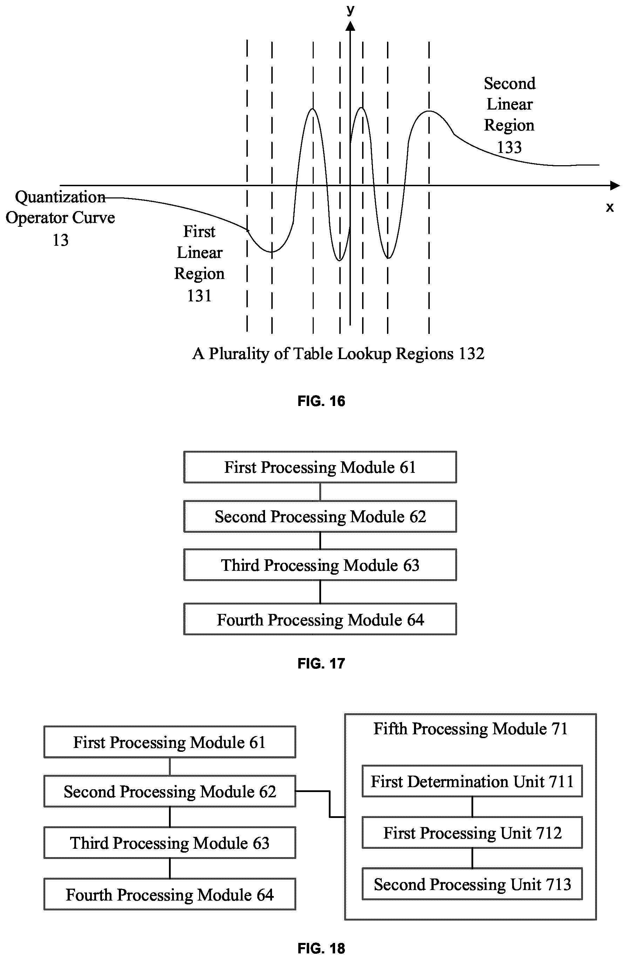

In some optional embodiments, FIG. 15 is a schematic diagram illustrating a plurality of preset data intervals according to an exemplary embodiment of the present disclosure. As shown in FIG. 15, for a curve of a quantization operator (that is, a quantization operator curve 13), a first linear region 131 on the left, a plurality of table lookup regions 132 in the middle (including six table lookup regions from a table lookup region 1321 to a table lookup region 1326), and a second linear region 133 on the right may be determined based on a range of x. For each of the table lookup regions (using the table lookup region 1321 as an example in the figure), quantization input values in the table lookup region are mapped to a plurality of preset index values 14 (that is, 64 values from 0 to 63 in the figure) of the table lookup region, and each of the preset index values corresponds to one quantization output value 15 (that is, a black dot under the preset index value in the figure). Equal segmentation for the table lookup regions in the plurality of preset data intervals in FIG. 15 is used as an example to illustrate the plurality of preset data intervals, but is not intended to limit the embodiments of the present disclosure. In the embodiments of the present disclosure, the table lookup region is determined based on magnitudes of change gradients of operator output values of the quantization operator, and the table lookup region is not subject to even segmentation. FIG. 16 is a schematic diagram illustrating a plurality of table lookup regions according to an exemplary embodiment of the present disclosure. As shown in FIG. 16, a plurality of table lookup regions 132 are determined based on magnitudes of change gradients of operator output values of a quantization operator, so that magnitudes of change gradients of operator output values in each of the table lookup regions are close, avoiding a case of relatively significant fluctuations of an operator output value in a same table lookup region, thereby improving overall table lookup accuracy. If an equal segmentation manner is adopted, a crest and a trough in the middle may be in a same table lookup region, resulting in significant fluctuations and reducing table lookup accuracy.

The embodiments of the present disclosure described above may be implemented separately, or in any combination without conflict, and may be specifically set based on an actual requirement, which is not limited in the present disclosure.

Any one of the quantization methods for the neural network model provided in the embodiments of the present disclosure may be performed by any suitable device with a data processing capability, including but not limited to: a terminal device, a server, and the like. Alternatively, any one of the quantization methods for the neural network model provided in the embodiments of the present disclosure may be performed by a processor. For example, the processor performs, by calling corresponding instructions stored in a memory, any one of the quantization methods for the neural network model mentioned in the embodiments of the present disclosure. This is not repeated below.

Exemplary Apparatus

FIG. 17 is a schematic diagram illustrating a structure of a quantization apparatus for a neural network model according to an exemplary embodiment of the present disclosure. The apparatus of this embodiment may be used for implementing the corresponding method embodiment of the present disclosure. The apparatus shown in FIG. 17 may include a first processing module 61, a second processing module 62, a third processing module 63, and a fourth processing module 64.

The first processing module 61 may be configured for determining, based on an operation operator for an operation of the neural network model and input data, quantization input data corresponding to the input data.

The second processing module 62 may be configured for determining a target data interval corresponding to the quantization input data from a plurality of preset data intervals, where the plurality of preset data intervals are determined based on magnitudes of change gradients of output values of a quantization operator relative to its input values, and the quantization operator is an operator obtained by quantizing the operation operator.

The third processing module 63 may be configured for determining a target quantization output value corresponding to the quantization input data based on the quantization input data and index information corresponding to the target data interval.

The fourth processing module 64 may be configured for determining, based on the target quantization output value, a quantization result of the input data calculated by the operation operator.

FIG. 18 is a schematic diagram illustrating a structure of a quantization apparatus for a neural network model according to another exemplary embodiment of the present disclosure.

In some optional embodiments, as shown in FIG. 18, based on the embodiment shown in FIG. 17 above, the apparatus of this embodiment of the present disclosure may further include a fifth processing module 71, which may be configured for determining the plurality of preset data intervals.

The fifth processing module 71 may include a first determination unit 711, a first processing unit 712, and a second processing unit 713.

The first determination unit 711 may be configured for determining a quantization input data range of the quantization operator.

The first processing unit 712 may be configured for determining a first linear region, a second linear region, and a plurality of table lookup regions corresponding to the quantization input data based on the quantization input data range and magnitudes of change gradients of the quantization operator within the quantization input data range, where the plurality of table lookup regions are non-linear regions.

The second processing unit 713 may be configured for determining the plurality of preset data intervals based on the first linear region, the second linear region, and the table lookup regions.

In some optional embodiments, the first processing unit 712 may be specifically configured for determining the first linear region and the second linear region through least squares fitting based on the quantization input data range and operator output values of the quantization operator at quantization input values within the quantization input data range; determining, absolute values of second-order differences respectively corresponding to quantization input values in the non-linear regions, based on operator output values of the quantization operator at the quantization input values in the non-linear regions; determining, interval boundary values respectively corresponding to the plurality of table lookup regions, based on the absolute values of second-order differences respectively corresponding to the quantization input values in the non-linear regions; and obtaining the plurality of table lookup regions based on the interval boundary values respectively corresponding to the table lookup regions.

In some optional embodiments, the first processing unit 712 may be specifically configured for determining a to-be-searched threshold range; determining a target threshold within the to-be-searched threshold range based on a binary search approach, so that a sum of absolute values of second-order differences respectively corresponding to quantization input values in all of a plurality of intervals obtained by segmenting the non-linear region is less than or equal to the target threshold; and determining, as the interval boundary values for the table lookup regions, boundary values of the intervals obtained by segmenting the non-linear region.

In some optional embodiments, the first processing unit 712 may be specifically configured for determining the first linear region and the second linear region through least squares fitting based on the quantization input data range and operator output values of the quantization operator at quantization input values within the quantization input data range; segmenting the non-linear region into a plurality of sub-ranges in response to the quantization operator being a preset quantization operator; determining, for any one of the plurality of sub-ranges, multiple table lookup regions corresponding to the sub-range based on magnitudes of change gradients of the quantization operator within the sub-range; and obtaining a plurality of table lookup regions in the non-linear region based on table lookup regions respectively corresponding to the sub-ranges.

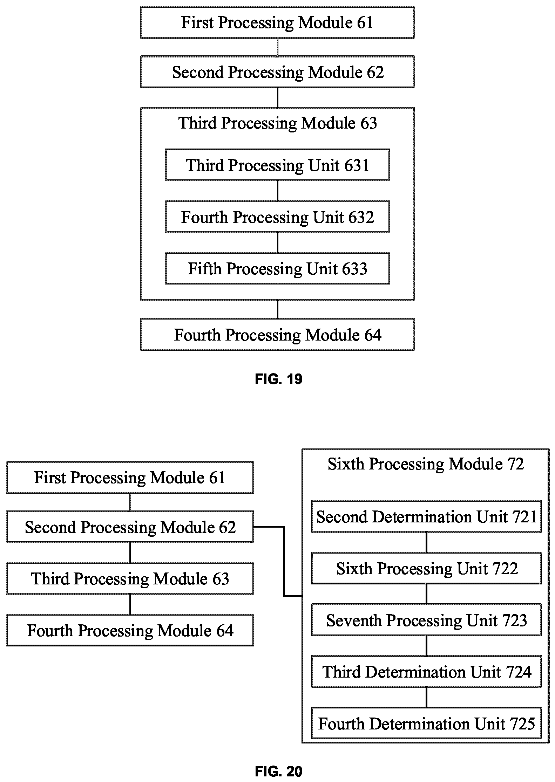

FIG. 19 is a schematic diagram illustrating a structure of a quantization apparatus for a neural network model according to still another exemplary embodiment of the present disclosure.

In some optional embodiments, the index information corresponding to each of the table lookup regions in the plurality of preset data intervals may include the quantization output values respectively corresponding to the plurality of preset index values.

In some optional embodiments, as shown in FIG. 19, based on the embodiment shown in FIG. 17 above, the third processing module 63 may include a third processing unit 631, a fourth processing unit 632, and a fifth processing unit 633.

The third processing unit 631 may be configured for acquiring a mapping parameter corresponding to the target data interval in response to the target data interval being a table lookup region.

The mapping parameter is used for mapping the quantization input data from a quantization input data range to a preset index data range corresponding to the target data interval. The preset index data range is a data range of a table lookup index value corresponding to the target data interval.

The fourth processing unit 632 may be configured for determining, based on the mapping parameter, a target index value for the quantization input data within the preset index data range.

The fifth processing unit 633 may be configured for determining, the target quantization output value corresponding to the quantization input data, based on the target index value and the quantization output values respectively corresponding to the plurality of preset index values in the index information.

In some optional embodiments, the fifth processing unit 633 may be specifically configured for: in response to the target index value belonging to a target preset index value in the plurality of preset index values, determining, as the target quantization output value, a quantization output value corresponding to the target preset index value; or in response to the target index value not belonging to the plurality of preset index values, determining a first preset index value and a second preset index value that are adjacent to the target index value in the plurality of preset index values; and determining, a quantization output value corresponding to the target index value as the target quantization output value, based on the target index value, the first preset index value, the second preset index value, a first quantization output value corresponding to the first preset index value, and a second quantization output value corresponding to the second preset index value.

FIG. 20 is a schematic diagram illustrating a structure of a quantization apparatus for a neural network model according to yet another exemplary embodiment of the present disclosure.

In some optional embodiments, the index information corresponding to each of the table lookup regions in the plurality of preset data intervals includes the quantization output values respectively corresponding to the plurality of preset index values. As shown in FIG. 20, based on the embodiment shown in FIG. 17 above, the apparatus of this embodiment of the present disclosure may further include a sixth processing module 72, which may be configured for determining the index information corresponding to each of the table lookup regions in the plurality of preset data intervals, that is, determining, for any table lookup region in the plurality of preset data intervals, quantization output values respectively corresponding to a plurality of preset index values in the table lookup region.

In some optional embodiments, as shown in FIG. 20, the sixth processing module 72 may include a second determination unit 721, a sixth processing unit 722, a seventh processing unit 723, a third determination unit 724, and a fourth determination unit 725.

The second determination unit 721 may be configured for determining, based on a mapping parameter corresponding to the table lookup region, quantization input values respectively corresponding to the preset index values.

The sixth processing unit 722 may be configured for calculating, based on the quantization input values respectively corresponding to the preset index values, operator output values of the quantization operator at the preset index values corresponding to the table lookup region.

The seventh processing unit 723 may be configured for determining, for any one of the preset index values, a plurality of candidate output values within a preset range for an operator output value corresponding to the preset index value.

The third determination unit 724 may be configured for determining fitting error terms respectively corresponding to the preset index values based on candidate output values respectively corresponding to the preset index values.

A fitting error term corresponding to any one of the preset index values includes a fitting error corresponding to each of the candidate output values for the preset index value.

The fourth determination unit 725 may be configured for determining the index information corresponding to the table lookup region based on the fitting error terms respectively corresponding to the preset index values.

In some optional embodiments, the third determination unit 724 may be specifically configured for: determining, based on each historical candidate output value corresponding to a previous preset index value for a current preset index value and each current candidate output value corresponding to the current preset index value, a fitting line segment between each historical candidate output value and each current candidate output value, wherein each of the preset index values is sequentially used as the current preset index value according to a preset order; and determining a fitting error term corresponding to the current preset index value based on a previous error term corresponding to the previous preset index value determined previously, the fitting line segment between each historical candidate output value and each current candidate output value, and the quantization operator.

In some optional embodiments, the third determination unit 724 may be specifically configured for: calculating, based on the quantization operator, operator output values respectively corresponding to target quantization input values mapped to between the current preset index value and the previous preset index value; determining, for the fitting line segment between each historical candidate output value and each current candidate output value, respective fitting values for the target quantization input values on the fitting line segment based on the fitting line segment; and determining the fitting error term corresponding to the current preset index value based on the previous error term, the operator output values respectively corresponding to the target quantization input values, and the fitting values for the target quantization input values on the respective fitting line segments.

In some optional embodiments, the fourth determination unit 725 may be specifically configured for: determining, from candidate output values corresponding to a target preset index value, a quantization output value corresponding to the target preset index value based on an association relationship between a fitting error term corresponding to the target preset index value and a fitting error term corresponding to a previous preset index value for the target preset index value and based on a quantization output value corresponding to the previous preset index value determined previously, wherein each of the preset index values is sequentially used as the target preset index value according to a reverse order of the preset order; and determining the index information corresponding to the table lookup region based on quantization output values respectively corresponding to the preset index values.

In some optional embodiments, the index information corresponding to each of the table lookup regions in the plurality of preset data intervals includes the quantization output values respectively corresponding to the plurality of preset index values. The sixth processing module 72 may be specifically configured for: determining, based on an operator output value and a preset range corresponding to any one of the preset index values, candidate offset values of candidate output values corresponding to the preset index value relative to the operator output value; determining minimum errors respectively corresponding to the candidate output values based on errors respectively corresponding to different candidate offset values in a previous error term, the candidate offset values respectively corresponding to the candidate output values, and a preset condition; determining, from the candidate output values, a quantization output value corresponding to the preset index value based on the minimum errors respectively corresponding to the candidate output values; and determining the index information corresponding to the table lookup region based on quantization output values respectively corresponding to the preset index values.

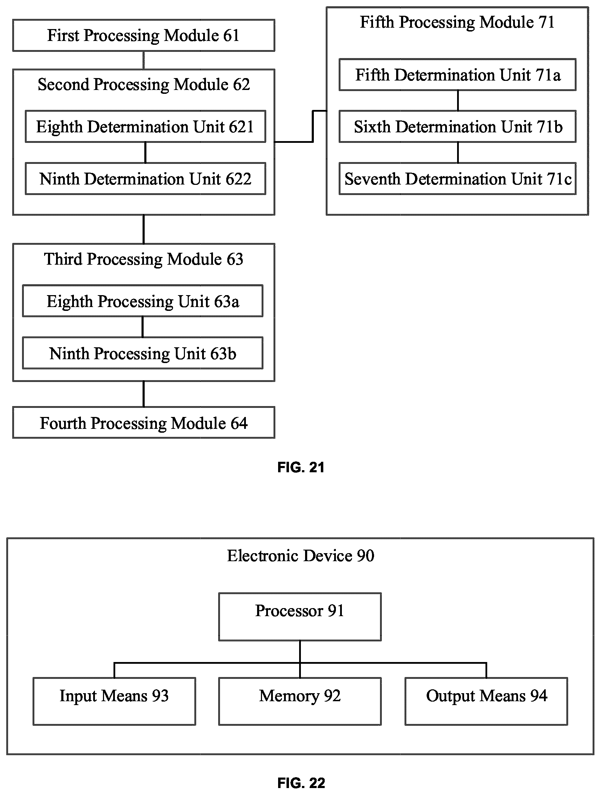

FIG. 21 is a schematic diagram illustrating a structure of a quantization apparatus for a neural network model according to still another exemplary embodiment of the present disclosure.

In some optional embodiments, as shown in FIG. 21, based on the embodiment shown in FIG. 17 above, the apparatus of this embodiment of the present disclosure may further include a fifth processing module 71, which may be configured for determining the plurality of preset data intervals.

In some optional embodiments, as shown in FIG. 21, the fifth processing module 71 may include:

a fifth determination unit 71a, which may be configured for determining a function type of the quantization operator;

a sixth determination unit 71b, which may be configured for: in response to the function type being an even function or an odd function, determining a first sub-range and a second sub-range based on the quantization input data range of the quantization operator, where the first sub-range and the second sub-range each represent half of the quantization input data range; and

a seventh determination unit 71c, which may be configured for determining the plurality of preset data intervals based on the first sub-range and magnitudes of change gradients of the quantization operator in the first sub-range; or determining the plurality of preset data intervals based on the second sub-range and magnitudes of change gradients of the quantization operator in the second sub-range.

In some optional embodiments, as shown in FIG. 21, the second processing module 62 may include an eighth determination unit 621 and a ninth determination unit 622.

The eighth determination unit 621 may be configured for determining, based on the quantization input data and the function type of the quantization operator, an input value for table lookup corresponding to the quantization input data.

The ninth determination unit 622 may be configured for determining, from the plurality of preset data intervals based on the input value for table lookup, a target data interval corresponding to the input value for table lookup.

The third processing module 63 may include an eighth processing unit 63a and a ninth processing unit 63b.

The eighth processing unit 63a may be configured for determining, based on the input value for table lookup and the index information corresponding to the target data interval, a quantization output value corresponding to the input value for table lookup.

The ninth processing unit 63b may be configured for determining, based on the quantization output value corresponding to the input value for table lookup, the target quantization output value corresponding to the quantization input data.

For beneficial technical effects corresponding to the exemplary embodiment of this apparatus, refer to the corresponding beneficial technical effects of the Exemplary Method section described above, which are not repeated herein.

Exemplary Electronic Device

FIG. 22 is a diagram illustrating a structure of an electronic device based on an embodiment of the present disclosure. The electronic device 90 includes at least one processor 91 and a memory 92.

The processor 91 may be a central processing unit (CPU) or another form of processing unit having a data processing capability and/or an instruction execution capability, and may control another component in the electronic device 90 to perform a desired function.

The memory 92 may include one or more computer program products. The computer program product may include various forms of computer readable storage media, such as a volatile memory and/or a non-volatile memory. The volatile memory may include, for example, a random access memory (RAM) and/or a cache. The non-volatile memory may include, for example, a read-only memory (ROM), a hard disk, or a flash memory. The computer readable storage medium may store one or more computer program instructions. The processor 91 may run the one or more computer program instructions to implement the method and/or other desired functions in the foregoing embodiments of the present disclosure.

In an example, the electronic device 90 may further include: an input means 93 and an output means 94. The components are interconnected through a bus system and/or other forms of connection mechanisms (not shown).

The input means 93 may further include, for example, a keyboard or a mouse.

The output means 94 may output various information to the outside, and may include, for example, a display, a loudspeaker, a printer, and a communication network and a remote output means connected thereto.

Certainly, for simplicity, only some components in the electronic device 90 that are related to the present disclosure are shown in FIG. 22, and components such as a bus and an input/output interface are omitted. Besides, the electronic device 90 may further include any other appropriate components depending on specific applications.

Exemplary Computer Program Product And Computer Readable Storage Medium

In addition to the foregoing method and device, the embodiments of the present disclosure may also provide a computer program product including computer program instructions that, when run by a processor, cause the processor to perform the steps of the method according to the embodiments of the present disclosure that is described in the "Exemplary Method" section.

The computer program product may be program code, written with one or any combination of a plurality of programming languages, which is configured for performing the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when run by a processor, cause the processor to perform the steps of the method according to the embodiments of the present disclosure that is described in the "Exemplary Method" section.

The computer readable storage medium may be one readable medium or any combination of a plurality of readable media. The readable medium may be a readable signal medium or a readable storage medium. The readable storage medium includes, for example, but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a RAM, a ROM, an EPROM or a flash memory, an optical fiber, a portable compact disk ROM (CD-ROM), an optical storage device, a magnetic storage device, or any suitable combination of the above.

Basic principles of the present disclosure are described above in combination with specific embodiments. However, the advantages, superiorities, effects, and the like mentioned in the present disclosure are merely examples rather than limitations, and it should not be considered that these advantages, superiorities, effects, and the like are necessary for each of the embodiment of the present disclosure. In addition, specific details disclosed above are merely for examples and for ease of understanding, rather than limitations. The details described above do not limit that the present disclosure must be implemented according to the foregoing specific details.

A person skilled in the art may make various modifications and variations to the present disclosure without departing from the spirit and scope of this application. The present disclosure is intended to cover these modifications and variations provided that they fall within the scope of protection defined by the claims of the present disclosure or equivalents thereof.

**Claims**

1. A quantization method for a neural network model, **characterized by** comprising:

   determining (201), based on an operation operator for an operation of the neural network model and input data, quantization input data corresponding to the input data;
   determining (202) a target data interval corresponding to the quantization input data from a plurality of preset data intervals, wherein the plurality of preset data intervals are determined based on magnitudes of change gradients of output values of a quantization operator relative to its input values, and the quantization operator is an operator obtained by quantizing the operation operator;
   determining (203) a target quantization output value corresponding to the quantization input data based on the quantization input data and index information corresponding to the target data interval; and
   determining (204), based on the target quantization output value, a quantization result of the input data calculated by the operation operator.

2. The method according to claim 1, wherein the plurality of preset data intervals are obtained by:

   determining (301) a quantization input data range of the quantization operator;
   determining (302) a first linear region, a second linear region, and a plurality of table lookup regions corresponding to the quantization input data based on the quantization input data range and magnitudes of change gradients of the quantization operator within the quantization input data range, wherein the plurality of table lookup regions are non-linear regions; and
   determining (303) the plurality of preset data intervals based on the first linear region, the second linear region, and the table lookup regions.

3. The method according to claim 2, wherein the determining (302) a first linear region, a second linear region, and a plurality of table lookup regions corresponding to the quantization input data based on the quantization input data range and magnitudes of change gradients of the quantization operator within the quantization input data range comprises:

determining (3021) the first linear region and the second linear region through least squares fitting based on the quantization input data range and operator output values of the quantization operator at quantization input values within the quantization input data range;

determining (3022), absolute values of second-order differences respectively corresponding to quantization input values in the non-linear regions, based on operator output values of the quantization operator at the quantization input values in the non-linear regions;

determining (3023), interval boundary values respectively corresponding to the plurality of table lookup regions, based on the absolute values of second-order differences respectively corresponding to the quantization input values in the non-linear regions; and

obtaining (3024) the plurality of table lookup regions based on the interval boundary values respectively corresponding to the table lookup regions.

4. The method according to claim 3, wherein the determining (3023), interval boundary values respectively corresponding to the plurality of table lookup regions, based on the absolute values of second-order differences respectively corresponding to the quantization input values in the non-linear regions comprises:

determining a to-be-searched threshold range;

determining a target threshold within the to-be-searched threshold range based on a binary search approach, so that a sum of absolute values of second-order differences respectively corresponding to quantization input values in all of a plurality of intervals obtained by segmenting the non-linear region is less than or equal to the target threshold; and

determining, as the interval boundary values for the table lookup regions, boundary values of the intervals obtained by segmenting the non-linear region.

5. The method according to claim 1, wherein index information corresponding to each of the table lookup regions in the plurality of preset data intervals comprises quantization output values respectively corresponding to a plurality of preset index values; and

the determining (203) a target quantization output value corresponding to the quantization input data based on the quantization input data and index information corresponding to the target data interval comprises:

acquiring (2031) a mapping parameter corresponding to the target data interval in response to the target data interval being a table lookup region, wherein the mapping parameter is used for mapping the quantization input data from a quantization input data range to a preset index data range corresponding to the target data interval, and the preset index data range is a data range of a table lookup index value corresponding to the target data interval;

determining (2032), based on the mapping parameter, a target index value for the quantization input data within the preset index data range; and

determining (2033), the target quantization output value corresponding to the quantization input data, based on the target index value and the quantization output values respectively corresponding to the plurality of preset index values in the index information.

6. The method according to claim 5, wherein the determining (2033), the target quantization output value corresponding to the quantization input data, based on the target index value and the quantization output values respectively corresponding to the plurality of preset index values in the index information comprises:

in response to the target index value belonging to a target preset index value in the plurality of preset index values, determining, as the target quantization output value, a quantization output value corresponding to the target preset index value; or

in response to the target index value not belonging to the plurality of preset index values, determining a first preset index value and a second preset index value that are adjacent to the target index value in the plurality of preset index values; and

determining, a quantization output value corresponding to the target index value as the target quantization output value, based on the target index value, the first preset index value, the second preset index value, a first quantization output value corresponding to the first preset index value, and a second quantization output value corresponding to the second preset index value.

7. The method according to claim 2, wherein the determining (302) a first linear region, a second linear region, and a plurality of table lookup regions corresponding to the quantization input data based on the quantization input data range and magnitudes of change gradients of the quantization operator within the quantization input data range comprises:

determining (3021) the first linear region and the second linear region through least squares fitting based on the quantization input data range and operator output values of the quantization operator at quantization input values within the quantization input data range;
segmenting (302b) the non-linear region into a plurality of sub-ranges in response to the quantization operator being a preset quantization operator; and
determining (302c), for any one of the plurality of sub-ranges, multiple table lookup regions corresponding to the sub-range based on magnitudes of change gradients of the quantization operator within the sub-range; and
obtaining a plurality of table lookup regions in the non-linear region based on table lookup regions respectively corresponding to the sub-ranges.

8. The method according to any one of claims 1 to 7, wherein the index information corresponding to each of the table lookup regions in the plurality of preset data intervals comprises the quantization output values respectively corresponding to the plurality of preset index values; and
the method further comprises:
determining (401), for any table lookup region in the plurality of preset data intervals, the index information corresponding to the table lookup region by:

determining (4011), based on a mapping parameter corresponding to the table lookup region, quantization input values respectively corresponding to the preset index values;
calculating (4012), based on the quantization input values respectively corresponding to the preset index values, operator output values of the quantization operator at the preset index values corresponding to the table lookup region;
determining (4013), for any one of the preset index values, a plurality of candidate output values within a preset range for an operator output value corresponding to the preset index value;
determining (4014) fitting error terms respectively corresponding to the preset index values based on candidate output values respectively corresponding to the preset index values, wherein a fitting error term corresponding to any one of the preset index values comprises a fitting error corresponding to each of the candidate output values for the preset index value; and
determining (4015) the index information corresponding to the table lookup region based on the fitting error terms respectively corresponding to the preset index values.

9. The method according to claim 8, wherein the determining (4014) fitting error terms respectively corresponding to the preset index values based on candidate output values respectively corresponding to the preset index values comprises:

determining (40141), based on each historical candidate output value corresponding to a previous preset index value for a current preset index value and each current candidate output value corresponding to the current preset index value, a fitting line segment between each historical candidate output value and each current candidate output value, wherein each of the preset index values is sequentially used as the current preset index value according to a preset order; and
determining (40142) a fitting error term corresponding to the current preset index value based on a previous error term corresponding to the previous preset index value determined previously, the fitting line segment between each historical candidate output value and each current candidate output value, and the quantization operator; and
wherein the determining (40142) a fitting error term corresponding to the current preset index value based on a previous error term corresponding to the previous preset index value determined previously, the fitting line segment between each historical candidate output value and each current candidate output value, and the quantization operator comprises:

calculating, based on the quantization operator, operator output values respectively corresponding to target quantization input values mapped to between the current preset index value and the previous preset index value;
determining, for the fitting line segment between each historical candidate output value and each current candidate output value, respective fitting values for the target quantization input values on the fitting line segment based on the fitting line segment; and
determining the fitting error term corresponding to the current preset index value based on the previous error term, the operator output values respectively corresponding to the target quantization input values, and the fitting values for the target quantization input values on the respective fitting line segments.

10. The method according to claim 9, wherein the determining (4015) the index information corresponding to the table lookup region based on the fitting error terms respectively corresponding to the preset index values comprises:

determining (40151), from candidate output values corresponding to a target preset index value, a quantization output value corresponding to the target preset index value based on an association relationship between a fitting error term corresponding to the target preset index value and a fitting error term corresponding to a previous preset index value for the target preset index value and based on a quantization output value corresponding to the previous preset index value determined previously, wherein each of the preset index values is sequentially used as the target preset index value according to a reverse order of the preset order; and
determining (40152) the index information corresponding to the table lookup region based on quantization output values respectively corresponding to the preset index values.

11. The method according to any one of claims 1 to 7, wherein the index information corresponding to each of the table lookup regions in the plurality of preset data intervals comprises the quantization output values respectively corresponding to the plurality of preset index values;
the method further comprises:
determining (401), for any table lookup region in the plurality of preset data intervals, the index information corresponding to the table lookup region by:

determining (401a), based on an operator output value and a preset range corresponding to any one of the preset index values, candidate offset values of candidate output values corresponding to the preset index value relative to the operator output value;
determining (401b) minimum errors respectively corresponding to the candidate output values based on errors respectively corresponding to different candidate offset values in a previous error term, the candidate offset values respectively corresponding to the candidate output values, and a preset condition;
determining (401c), from the candidate output values, a quantization output value corresponding to the preset index value based on the minimum errors respectively corresponding to the candidate output values; and
determining (401d) the index information corresponding to the table lookup region based on quantization output values respectively corresponding to the preset index values; and
wherein the plurality of preset data intervals are obtained by:

determining (501) a function type of the quantization operator;
in response to the function type being an even function or an odd function, determining (502) a first sub-range and a second sub-range based on the quantization input data range of the quantization operator, wherein the first sub-range and the second sub-range each represent half of the quantization input data range; and
determining (503) the plurality of preset data intervals based on the first sub-range and magnitudes of change gradients of the quantization operator in the first sub-range; or determining the plurality of preset data intervals based on the second sub-range and magnitudes of change gradients of the quantization operator in the second sub-range.

12. The method according to claim 11, wherein the determining (202) a target data interval corresponding to the quantization input data from a plurality of preset data intervals comprises:

determining (2021), based on the quantization input data and the function type of the quantization operator, an input value for table lookup corresponding to the quantization input data; and
determining (2022), from the plurality of preset data intervals based on the input value for table lookup, a target data interval corresponding to the input value for table lookup; and
wherein the determining (203) a target quantization output value corresponding to the quantization input data based on the quantization input data and index information corresponding to the target data interval comprises:

determining (203a), based on the input value for table lookup and the index information corresponding to the target data interval, a quantization output value corresponding to the input value for table lookup; and

determining (203b), based on the quantization output value corresponding to the input value for table lookup, the target quantization output value corresponding to the quantization input data.

13. A quantization apparatus for a neural network model, **characterized by** comprising:

a first processing module (61), configured for determining, based on an operation operator for an operation of the neural network model and input data, quantization input data corresponding to the input data;

a second processing module (62), configured for determining a target data interval corresponding to the quantization input data from a plurality of preset data intervals, wherein the plurality of preset data intervals are determined based on magnitudes of change gradients of output values of a quantization operator relative to its input values, and the quantization operator is an operator obtained by quantizing the operation operator;

a third processing module (63), configured for determining a target quantization output value corresponding to the quantization input data based on the quantization input data and index information corresponding to the target data interval; and

a fourth processing module (64), configured for determining, based on the target quantization output value, a quantization result of the input data calculated by the operation operator.

14. A non-transitory computer readable storage medium, on which a computer program is stored, **characterized by** that the computer program, when executed by a processor, causes the processor to implement the method according to any one of claims 1 to 12.

15. **An** electronic device (90), **characterized by** comprising:

a processor (91); and

a memory (92) configured for storing instructions executable by the processor (91), wherein

the processor (91) is configured for reading the executable instructions from the memory (92), and executing the instructions to implement the method according to any one of claims 1 to 12.

Neural Network Model 11

| Operation Operator 111 | Operation Operator 112 | ··· | Operation Operator 11n |

operation
operator and
corresponding
input data

Quantization
Apparatus 12
For Neural
Network Model

quantization result
of the input data
calculated by the
operation operator

**FIG. 1**

determining, based on an operation operator for an operation of athe neural network model and corresponding input data, quantization input data corresponding to the input data ⟋201

determining a target data interval corresponding to the quantization input data from a plurality of preset data intervals, where the plurality of preset data intervals are determined based on magnitudes of change gradients of output values of a quantization operator relative to its input values ⟋202

determining a target quantization output value corresponding to the quantization input data based on the quantization input data and index information corresponding to the target data interval ⟋203

determining, based on the target quantization output value, a quantization result of the input data calculated by the operation operator ⟋204

**FIG. 2**

determining a quantization input data range of the quantization operator ⟋301

determining a first linear region, a second linear region, and a plurality of table lookup regions corresponding to the quantization input data based on the quantization input data range and magnitudes of change gradients of the quantization operator within the quantization input data range, where the plurality of table lookup regions are non-linear regions ⟋302

determining the plurality of preset data intervals based on the first linear region, the second linear region, and the table lookup regions ⟋303

**FIG. 3**

| determining a quantization input data range of the quantization operator | 301 |

↓

| determining a first linear region and a second linear region through least squares fitting based on the quantization input data range and operator output values of the quantization operator at quantization input values within the quantization input data range | 3021 |

↓

| determining, quadratic differenceabsolute values of second-order differences absolute values respectively corresponding to quantization input values in the non-linear regions, based on operator output values of the quantization operator at the quantization input values in the non-linear regions | 3022 |

↓

| determining, interval boundary values respectively corresponding to the plurality of table lookup regions, based on the quadratic differenceabsolute values of second-order differences absolute values respectively corresponding to the quantization input values in the non-linear regions | 3023 |

↓

| obtaining the plurality of table lookup regions based on the interval boundary values respectively corresponding to the table lookup regions | 3024 |

↓

| determining the plurality of preset data intervals based on the first linear region, the second linear region, and the table lookup regions | 303 |

**FIG. 4**

| determining a quantization input data range of the quantization operator | 301 |

↓

| determining a first linear region and a second linear region through least squares fitting based on the quantization input data range and operator output values of the quantization operator at quantization input values within the quantization input data range | 302a |

↓

| segmenting a non-linear region into a plurality of sub-ranges in response to the quantization operator being a preset quantization operator | 302b |

↓

| determining, for any one of the plurality of sub-ranges, multiple table lookup regions corresponding to the sub-range based on magnitudes of change gradients of the quantization operator within the sub-range; and obtaining a plurality of table lookup regions in the non-linear region based on table lookup regions respectively corresponding to the sub-ranges | 302c |

↓

| determining the plurality of preset data intervals based on the first linear region, the second linear region, and the table lookup regions | 303 |

**FIG. 5**

determining, based on an operation operator for an operation of athe neural network model and corresponding input data, quantization input data corresponding to the input data /⌐201

determining a target data interval corresponding to the quantization input data from a plurality of preset data intervals, where the plurality of preset data intervals are determined based on magnitudes of change gradients of output values of a quantization operator relative to its input values /⌐202

acquiring a mapping parameter corresponding to the target data interval in response to the target data interval being a table lookup region /⌐2031

determining, based on the mapping parameter, a target index value for the quantization input data within the preset index data range /⌐2032

determining a target quantization output value corresponding to the quantization input data based on the target index value and the quantization output values respectively corresponding to the plurality of preset index values in the index information /⌐2033

determining, based on the target quantization output value, a quantization result of the input data calculated by the operation operator /⌐204

**FIG. 6**

determining, for any table lookup region in a plurality of preset data intervals, index information corresponding to the table lookup region /⌐401

determining, based on an operation operator for an operation of athe neural network model and corresponding input data, quantization input data corresponding to the input data /⌐201

determining a target data interval corresponding to the quantization input data from a plurality of preset data intervals, where the plurality of preset data intervals are determined based on magnitudes of change gradients of output values of a quantization operator relative to its input values /⌐202

determining a target quantization output value corresponding to the quantization input data based on the quantization input data and index information corresponding to the target data interval /⌐203

determining, based on the target quantization output value, a quantization result of the input data calculated by the operation operator /⌐204

**FIG. 7**

| determining, based on a mapping parameter corresponding to the table lookup region, quantization input values respectively corresponding to the preset index values | 4011 |

| calculating, based on the quantization input values respectively corresponding to the preset index values, operator output values of the quantization operator at the preset index values corresponding to the table lookup region | 4012 |

| determining, for any one of the preset index values, a plurality of candidate output values within a preset range for an operator output value corresponding to the preset index value | 4013 |

| determining fitting error terms respectively corresponding to the preset index values based on candidate output values respectively corresponding to the preset index values | 4014 |

| determining the index information corresponding to the table lookup region based on the fitting error terms respectively corresponding to the preset index values | 4015 |

**FIG. 8**

Quantization Output Value Determination Manner 1

$A_i$

$A_{i+1}$

$A_j$

Quantization Operator Curve S

$y_j$

Quantization Output Value Determination Manner 2

$A'_i$

$A'_{i+1}$

$A'_j$

$y_j$

Quantization Operator Curve S

$x_j$

$x$

**FIG. 9**

determining, based on a mapping parameter corresponding to the table lookup region, quantization input values respectively corresponding to the preset index values — 4011

calculating, based on the quantization input values respectively corresponding to the preset index values, operator output values of the quantization operator at the preset index values corresponding to the table lookup region — 4012

determining, for any one of the preset index values, a plurality of candidate output values within a preset range for an operator output value corresponding to the preset index value — 4013

sequentially using the preset index values as a current preset index value in a preset order, and determining, based on each historical candidate output value corresponding to a previous preset index value for a current preset index value and each current candidate output value corresponding to the current preset index value, a fitting line segment between each historical candidate output value and each current candidate output value, wherein each of the preset index values is sequentially used as the current preset index value according to a preset order — 40141

determining a fitting error term corresponding to the current preset index value based on a previous error term corresponding to the previous preset index value determined previously, the fitting line segment between each historical candidate output value and each current candidate output value, and the quantization operator — 40142

sequentially using the preset index values as a target preset index value in reverse order of the preset order, and determining, from candidate output values corresponding to thea target preset index value, a quantization output value corresponding to the target preset index value based on an association relationship between a fitting error term corresponding to the target preset index value and a fitting error term corresponding to a previous preset index value for the target preset index value and based on a quantization output value corresponding to the previous preset index value determined previously, wherein each of the preset index values is sequentially used as the target preset index value according to a reverse order of the preset order — 40151

determining the index information corresponding to the table lookup region based on quantization output values respectively corresponding to the preset index values — 40152

FIG. 10

determining, based on an operator output value and a preset range corresponding to any one of the preset index values, candidate offset values of candidate output values corresponding to the preset index value relative to the operator output value 401a

determining minimum errors respectively corresponding to the candidate output values based on errors respectively corresponding to different candidate offset values in a previous error term, the candidate offset values respectively corresponding to the candidate output values, and a preset condition 401b

401c

determining, from the candidate output values, a quantization output value corresponding to the preset index value based on the minimum errors respectively corresponding to the candidate output values

determining the index information corresponding to the table lookup region based on quantization output values respectively corresponding to the preset index values 401d

**FIG. 11**

**FIG. 12**

determining a function type of the quantization operator — 501

↓

in response to the function type being an even function or an odd function, determining a first sub-range and a second sub-range based on the quantization input data range of the quantization operator, where the first sub-range and the second sub-range each arerepresent half ranges of the quantization input data range — 502

↓

determining the plurality of preset data intervals based on the first sub-range and magnitudes of change gradients of the quantization operator in the first sub-range; or determining the plurality of preset data intervals based on the second sub-range and magnitudes of change gradients of the quantization operator in the second sub-range — 503

**FIG. 13**

determining a function type of the quantization operator — 501

↓

in response to the function type being an even function or an odd function, determining a first sub-range and a second sub-range based on the quantization input data range of the quantization operator, where the first sub-range and the second sub-range each arerepresent half ranges of the quantization input data range — 502

↓

determining the plurality of preset data intervals based on the first sub-range and magnitudes of change gradients of the quantization operator in the first sub-range; or determining the plurality of preset data intervals based on the second sub-range and magnitudes of change gradients of the quantization operator in the second sub-range — 503

↓

determining, based on an operation operator for an operation of athe neural network model and corresponding input data, quantization input data corresponding to the input data — 201

↓

determining, based on the quantization input data and the function type of the quantization operator, an input value for table lookup corresponding to the quantization input data — 2021

↓

determining, from the plurality of preset data intervals based on the input value for table lookup, a target data interval corresponding to the input value for table lookup — 2022

↓

determining, based on the input value for table lookup and the index information corresponding to the target data interval, a quantization output value corresponding to the input value for table lookup — 203a

↓

determining, based on the quantization output value corresponding to the input value for table lookup, the target quantization output value corresponding to the quantization input data — 203b

↓

determining, based on the target quantization output value, a quantization result of the input data calculated by the operation operator — 204

**FIG. 14**

**FIG. 15**

y

Second
Linear
Region
133

Quantization
Operator Curve
13

First
Linear
Region
131

x

A Plurality of Table Lookup Regions 132

**FIG. 16**

| First Processing Module 61 |
| Second Processing Module 62 |
| Third Processing Module 63 |
| Fourth Processing Module 64 |

**FIG. 17**

| First Processing Module 61 |
| Second Processing Module 62 |
| Third Processing Module 63 |
| Fourth Processing Module 64 |

Fifth Processing Module 71

| First Determination Unit 711 |
| First Processing Unit 712 |
| Second Processing Unit 713 |

**FIG. 18**

First Processing Module 61

Second Processing Module 62

Third Processing Module 63

Third Processing Unit 631

Fourth Processing Unit 632

Fifth Processing Unit 633

Fourth Processing Module 64

**FIG. 19**

First Processing Module 61

Second Processing Module 62

Third Processing Module 63

Fourth Processing Module 64

Sixth Processing Module 72

Second Determination Unit 721

Sixth Processing Unit 722

Seventh Processing Unit 723

Third Determination Unit 724

Fourth Determination Unit 725

**FIG. 20**

First Processing Module 61

Second Processing Module 62

Eighth Determination Unit 621

Ninth Determination Unit 622

Third Processing Module 63

Eighth Processing Unit 63a

Ninth Processing Unit 63b

Fourth Processing Module 64

Fifth Processing Module 71

Fifth Determination Unit 71a

Sixth Determination Unit 71b

Seventh Determination Unit 71c

**FIG. 21**

Electronic Device 90

Processor 91

Input Means 93

Memory 92

Output Means 94

**FIG. 22**

Europäisches
Patentamt

European
Patent Office

Office européen
des brevets

**EUROPEAN SEARCH REPORT**

Application Number

EP 25 18 2230

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/229602 A1 (SYNOPSYS INC [US]) 30 November 2023 (2023-11-30) * the whole document * ----- | 1-15 | INV. G06N3/0495 G06N3/063 G06F16/901 |

TECHNICAL FIELDS
SEARCHED (IPC)

G06F
G06N

The present search report has been drawn up for all claims

| Place of search | Date of completion of the search | Examiner |
|---|---|---|
| The Hague | 24 October 2025 | Ntarlagiannis, V |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 18 2230

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2025

| Patent document cited in search report | Publication date | Patent family member(s) | Publication date |
|---|---|---|---|
| WO 2023229602 A1 | 30-11-2023 | CN 119137592 A | 13-12-2024 |
| | | EP 4533292 A1 | 09-04-2025 |
| | | KR 20250004330 A | 07-01-2025 |
| | | WO 2023229602 A1 | 30-11-2023 |

For more details about this annex : see Official Journal of the European Patent Office, No. 12/82